Europäisches Patentamt

European Patent Office

Office européen des brevets

(19)

(11) Numéro de publication : **0 365 607 B1**

(12) **FASCICULE DE BREVET EUROPEEN**

(45) Date de publication du fascicule du brevet :
08.04.92 Bulletin 92/15

(51) Int. Cl.⁵ : **B60K 41/08,** F16H 61/00,
F16H 37/04

(21) Numéro de dépôt : **89902267.7**

(22) Date de dépôt : **03.02.89**

(86) Numéro de dépôt international :
**PCT/FR89/00042**

(87) Numéro de publication internationale :
**WO 89/07211 10.08.89 Gazette 89/18**

(54) **ENSEMBLE DE TRANSMISSION POUR VEHICULE OU MACHINE A COMMANDE ASSISTEE DES VITESSES, AUTOMATIQUE, SEMI-AUTOMATIQUE ET/OU NON MANUELLE.**

(30) Priorité : **04.02.88 FR 8801295**

(43) Date de publication de la demande :
**02.05.90 Bulletin 90/18**

(45) Mention de la délivrance du brevet :
**08.04.92 Bulletin 92/15**

(84) Etats contractants désignés :
**AT BE CH DE FR GB IT LI LU NL SE**

(56) Documents cités :
**DE-A- 3 500 329
GB-A- 1 186 904
GB-A- 2 041 468
GB-A- 2 089 450**

(73) Titulaire : **GIRARD, Jean
35, rue Sébastien-Mercier
F-75015 Paris (FR)**

(72) Inventeur : **GIRARD, Jean
35, rue Sébastien-Mercier
F-75015 Paris (FR)**

(74) Mandataire : **Gérardin, Robert Jean René
PROT'INNOV INTERNATIONAL SA 18 et 18bis,
rue de Bellefond BP 328-09
F-75428 Paris Cèdex 09 (FR)**

## Description

L'invention concerne un ensemble de transmission pour vehicule ou machine à commande assistée des vitesses,automatique,semi-automatique et/ou non manuelle.

Dans les conditions actuelles,les véhicules sont équipés:
– soit d'un ensemble de transmission à passage des vitesses automatique dont la sélection est commandée par un boitier électronique qui commande des tiroirs d'asservissements,alimentant des embrayages et des freins pour obtenir les rapports d'entrainement sélectionnés.Ce principe a quelques inconvénients majeurs,tel qu'un glissement à chaque passage des vitesses et une perte de rendement au convertisseur,qui amènent une consommation supplémentaire,entrainant l'handicap de ce principe.
– soit un ensemble de transmission à passage des vitesses à commande manuelle,qui est faite par un levier de vitesses qui sélectionne les vitesses par l'intermédiaire de fourchettes qui déplacent des pignons synchronisés pendant l'opération de débrayage qui s'effectue par une pédale au pied. Ce principe ne permet pas à un handicapé de se servir d'un tel véhicule.

Les machines,soit d'usinage,soit de fabrication ou de manutention nécéssitant un grand nombre de rapport de vitesses sont équipés soit de transmission à commande manuelle,soit de changement de vitesses électrique,ce qui,par manque d'automaticité,limite les possibilités d'utilisation. De plus,ces machines peuvent nécessiter,par ailleurs,de très grande variation de vitesse instantanée,que permettent pas les moyens de synchronisation actuel.

L'object de cette invention est donc d'apporter une solution à tous ces problèmes. De DE-A-3500 329 est connue une transmission à arbres parallèles automatisée montrant les caractéristiques du préambule de la revendication 1.

La dite"transmission",selon l'invention est assemblée dans un carter principal dans lequel sont placés les arbres primaire et secondaire avec leurs pignons fixes et mobiles,ces derniers étant liés en rotation par l'intermédiaire de fourchettes de manoeuvre reliées à des vérins de déplacement après avoir été synchronisés,lors du débrayagedes moyens d'accouplements, caractérisée en ce que la mise en action des vérins est assurée par l'intermédiaire d'un plateau relié à des moyens de déplacement linéaire ou rotatif,hydraulique et relié ou/non à des moyens manuels actionnés par levier de vitesses;le dit"plateau"est pourvu de cames assurant l'ouverture de clapets d'alimentation des vérins de déplacement des dites"fourchettes"de sélection des vitesses,et en ce qu'elle comporte en outre des moyens de commande du dispositif d'accouplement à l'arbre moteur,une pompe d'alimentation des moyens de déplacement du plateau de sélection et de l'asservissement des commandes,un boitier,ex:électronique,de commande des organes,relié à des capteurs de mesure du fonctionnement du moteur et de l'ensemble de transmission,permettant de programmer le passage des vitesses en fonction de données prédéfinies.

Ces vitesses sont synchronisées par un ensemble de synchronisme,commandé par le déplacement du plateau de sélection,actionné par au moins un vérin alimenté à partir d'un distributeur,le dit"synchronisme"agit sur le rapport des vitesses des deux arbres primaire et secondaire par l'intermédiaire d'un ensemble de pignons fixes,entrainé par un des dits arbre primaire ou secondaire et un autre ensemble de pignons mobiles,entrainé par l'autre des dits"arbres",et s'engrenant ensemble pour former les rapports des N vitesses de la transmission,et des moyens d'accouplement déplacés par le dit"plateau"viennent déplacer un axe,entrainé par l'arbre comportant l'ensemble des pignons mobiles,qui coulisse à l'intérieur de ces dits"pignons mobiles"pour placer l'épaulement prévu sur celui-ci,sur le pignon correspondant à la vitesse sélectionnée afin de le freiner et le lier en rotation à son arbre,par l'intermédiaire des billes logées entre des freins usinés en forme de"haricot",qui tournent dans l'alésage;prévu à cet effet,du dit "pignon"afin d'enclencher la vitesse sélectionnée après que les capteurs placés sur l'arbre primaire et secondaire aient signalé leurs vitesses respectives au boitier de comnande,afin d'alimenter le piston de déplacement de la fourchette de la vitesse sélectionnée.

Le dit"ensemble de transmission"comporte en outre un ensemble de mise au point mort des fourchettes de commande des vitesses,actionné par au moins un vérin agissant en sens opposé des vérins de poussée des fourchettes de passage des vitesses et ramenant ceux-ci et les fourchettes de sécurité en position repos pour permettre la poursuite du déplacement du plateau. La position de point mort étant signalé par le contact,au boitier afin d' alimenter un des distributeurs de déplacement du plateau.

Le dit"ensemble de transmission"comporte en outre un ensemble de fourchettes de sécurité empêchant le passage de deux ou plusieurs vitesses,à la fois, dû à la poussée,simultanée,de deux ou plusieurs pistons de commande de fourchettes de passage des vitesses,en maintenant les N autres fourchettes,que celle de la vitesse sélectionnée,en position point mort,par l'intermédiaire de doigts plaqués par le plateau qui libère le dit-"doigt"de la vitesse sélectionnée,par l'intermédiaire d'une came,usinée sur le dit"plateau"en correspondance avec sa position,pour permettre le dégagement du dit"doigt" par l'intermédiaire de la pression d'huile.

La dite"transmission"comporte d'autre part un ensemble d'asservissements dont l'organe d'accouplement

EP 0 365 607 B1

est constitué d'un embrayage relié à une pédale,afin de réaliser une conduite manuelle;et en outre comporte: un piston d'embrayage ,alimenté par au moins un distributeur,commandé par au moins un électro-aimant,à partir du dit"boitier"de commande,ce dit"distributeur"comportant un clapet de décharge,avec gicleur de réglage de rapidité de vidange,pour le retour en position repos de la fourchette d'embrayage; un organe de verrouillage de la commande de l'embrayage par le pied,qui est alimenté,par exemple,par un distributeur,commandé par un électro-aimant,à partir du dit"boitier",afin de réaliser une conduite automatique. Ces moyens de commande,agissant en fonction des ordres fournis par: un sélecteur de mode de marche automatique,semi-automatique ou manuel afin d' alimenter,en mode de marche automatique et semi-automatique,au moins un capteur destiné à signaler le sens de marche fourni par l'organe de sélection de sens de marche,par exemple le levier de vitesses;par un capteur de position de l'accouplement;par un capteur de l'accélérateur,dans le cas d'un emploi sur un véhicule;par au moins un capteur fonctionnel tel que régime moteur,vitesse,température,pression,position afin de commander l'ordre de passage;un capteur de position du plateau de sélection,de sorte à informer le dit"boitier"dès que le dit"plateau"est à la place de la vitesse sélectionnée,pour arrêter l'alimentation du vérin de déplacement du dit"plateau". En variante,un distributeur vient alimenter un système d'accouplement à glissement,interposé entre l'arbre primaire et l'embrayage et commandé par le dit"boitier"afin de déverroiuller ces deux parties,par l'intermédiaire d'un piston cannelé,placé entre ces parties,pour ensuite alimenter des cylindres radiaux de mise en pression variable d'huile qui poussent des galets sur des cames,usinées sur l'arbre de sortie d'embrayage,le dit"coupleur"se verrouillant dès que le glissement est terminé par l'intermédiaire du piston cannelé; des galets empêchant l'arbre primaire d'avoir une vitesse de rotation supérieure à l'arbre d'embrayage.

Selon une particularité appliqué ou non à ce dernier mode de réalisation,la dite"transmission"comporte un système d'embrayage du levier de vitesse,afin de réaliser,en outre,un passage des vitesses à commande manuelle,par l'intermédiaire d'un système mécanique de déplacement du plateau de sélection,qui est commandé par un axe relié au levier de vitesses,et qui comporte,un premier rochet pour les vitesses descendantes pour s'accrocher sur des crémaillères,fixées sur le plateau,afin de le déplacer d'une distance définie par la course du levier de vitesses,afin d'ouvrir l'alimentation du piston de poussée de la fourchette de passage de la vitesse correspondante;à cet ensemble vient s'ajouter un vérin de dégagement,placé en bout de l'axe,afin de maintenir dégagé le rochet,pour laisser le déplacement libre du plateau, lors du rétrogradage de plusieurs vitesses à la fois,en sautant de vitesses dans le cas d'une commande automatique.

Lorsque la dite"transmission"équipe un véhicule,un dispositif de coupure d' accélération,commandé par le boitier,est monté dans le circuit d'accélérateur pour permettre de couper le régime moteur,sans lever le pied de la pédale d'accélérateur,à chaque passage des vitesses,en commande semi-automatique,semi-automatique et laisser toute liberté d'action sur la commande de l'accélérateur,constitué d'un électro-aimant déverrouillant,par l'intermédiaire d'une came,la partie de couplage du câble d'accélérateur à la commande du volet d'admission d'air.

Le plateau comporte,en outre de la came d'ouverture des clapets d'alimentation des pistons de commande des fourchettes de passage des vitesses,une came de fermeture du piston de vidange de chaque piston de commande des dites"fourchettes"de passage des vitesses,des cames de commande d'ouverture d'alimentation des pistons de point mort,en commande manuelle,des cames de vidange des pistons de point mort,des cames de dégagement des doigts de verrouillage des fourchettes de sécurité.

L'ensemble des pignons mobiles et fixes des arbres primaire et secondaire présentent d'une part un taillage de dents en biais,de quelques degrés,pour permettre une plus grande rapidité de passage et faciliter le déverrouillage des billes de blocage du pignon synchronisateur;d'autre part afin d'offrir une plus grande sécurité de passage,les angles d'attaque des dents sont usinés,en retrait de 3mm environ,sur 4dents sur 5environ,ce qui limite les possibilités de friction entre pignons,dans le cas d'une défaillance du synchronisme.

La transmission selon l'invention peut permettre à un handicapé de se servir du même véhicule qu'un utilisateur normal,et apporte une facilité de commande,tant en commande manuelle,par le levier de vitesses facile à manoeuvrer, qu'en commande automatique dont la sélection se fait par un boitier électronique qui ordonne le passage des vitesses à partir de données précises telles que régime moteur,en fonction de la course d'accélérateur,ou vitesse ou pression;la commande semi-automatique permet à un handicapé de passer les vitesses soit par l'intermédiaire du levier de vitesses,soit par un impulsion sur la pédale d'embrayage.

Avec la dite"transmission",un même utilisateur peut choisir son mode de passage des vitesses selon son humeur,selon le moment dans le cas des embouteillages.

Cette dite"transmission"apporte une conduite souple et par la même occasion,une consommation reduite par le fait du passage des vitesses sélectionné au meilleur rendement du moteur.

Cette dite"transmission"selon l'invention permet un étalement des vitesses plus rapproché du nombre important de vitesses,donc une réduction supplémentaire de la consommation.

En utilisant plusieurs combinaisons de traitement des informations,le boitier de commande permet en plus

3

de la commande automatique:

– le passage des vitesses semi-automatique par le levier de vitesses avec le démarrage en 1ère et marche arrière automatique.

– le passage des vitesses semi-automatique par le levier de vitesses avec le démarrage en 1ère et marche arrière embrayé mécaniquement.

– le passage des vitesses semi-automtique par la pédale d'embrayage avec le démarrage en 1ère et marche arrière automatique.

– le passage des vitesses semi-automatique par la pédale d'embrayage avec le démarrage en 1ère et marche arrière embrayé mécaniquement.

– le passage des vitesses à commande manuelle.

Cette dite"transmission",selon l'invention peut permettre la fabrication de machines soit d'usinage,soit de fabrication,soit de manutation à passage des vitesses programmé,afin d'élargir leur possibilité d'utilisation pour les amortir plus rapidement ou réduire le prix de revient d'un produit. Afin de mieux comprendre la dite"transmission",le fonctionnement de cette dite"transmission",équipant un véhicule,est éxpliqué ainsi que le fonctionnement de l'attelage du câble accélérateur,du coupleur et de la pompe à huile.

Pour faciliter cette compréhension,un ensemble de figures est joint.

– La figure 1 représente l'ensemble de la dite "transmission" avec le positionnement de l'ensemble de com a de du passage des vitesses.

– La figure 2 représente l'ensemble de la dite "transmission" avec le positionnement de l'ensemble des clapets(85)d'alimentation et (89)de vidange des pistons de poussée des fourchettes ainsi que une vue de la commande d'embrayage avec l'entrainement (202) de la pompe et du coupleur (121).

– La figure 3 représente l'ensemble des pignons avec le positionnement des distributeurs d'asservissement,des cylindres d'embrayage,une vue éclatée du coupleur (121) ainsi que l'engrenage du synchronisme (33 et 34).

– La figure 4 représente l'ensemble de commande mécanique du passage des vitesses avec le positionnenent des axes (83 et 84) de mise au point mort.

– La figure 4a représente le positionnement des clapets (85) d'alimentation sur le carter (5) de sélection.

– La figure 5 re résente la figure:2 avec une vue arrière de l'alimentation du piston de 2ème.

– La figure 6 représente une vue de l'ensemble de l'alimentation des pistons et de l'asservissement de la dite"transmission".

– La figure 7 représente l'arbre primaire(12)avec l'ensemble de la commande du synchronisme entrainé par le plateau(72)de sélection,ainsi que le positionnement du capteur(164)de vitesses du dit"arbre.

– La figure 8 re résente l'arbre secondaire(13)avec une vue du positionnement des fourchettes de passage des vitesses et des fourchettes de verrouillage ainsi qu'une vue du positionnement du capteur(175) du dit-"arbre".

– La figure 9 représente l'ensemble de la dite"transmission"avec le positionnement de la pompe à huile(122)vue en éclaté avec son alimentation ainsi qu' une vue arrière du plateau(72)de sélection avec les cames(67)de verrouillage des fourchettes de sécurité,larrainure(68)de commande de la marche arrière et une vue de l'ensemble démultiplicateur de la commande du synchronisme.

– La figure 10 représente une vue des cames du plateau(72)de sélection et les fig.10a,10b,10c représentent les coupes partielles aa,bb,cc de la fig.10.

– La figure 11 représente la vue d'ensemble des fourchettes de verrouillage ainsi que la bague d'alimentation(156)des doigts(118)de verrouillage.

– La figure 12 représente l'ensemble de la commande de marche arrière ainsi que l'ensemble de mise au point mort.

– La figure 13 représente la coupe AA de la figure 3 de la dite"transmission" complète.

– La figure 14 représente une coupe transversale de la dite"transmission",au niveau d'un clapet d'alimentation et de vidange d'un piston de poussée de fourchette avec une vue du levier(25)de commande de la marche arrière.

– La figure 15 représente une coupe transversale de la dite"transmission" montrant l'ensemble d'alimentation d'un piston de poussée de fourchette de passage d'une vitesse avec son clapet d'alimentation,de vidange et d'aspiration avec une vue du psitionnement des fourchettes de verrouillage.

– La figure 16 représente une vue arrière montrant la position de l'ensemble démultiplicateur de commande du synchronisme et du noyau(174) de placement du plateau(72)ainsi qu'une coupe du verrouillage du levier de vitesses.

– La figure 17 représente une vue éclatée de l'ensemble du différentiel montrant une vue du positionnement de la pompe à huile(122),du coupleur(121), des distributeurs,de quelques conduits d'alimentation et des clapets d'aspiration des vérins de déplacement du plateau(72)de sélection.

EP 0 365 607 B1

– La figure 18 montre le passage de l'ensemble des conduits d'alimentation dans la partie superieure du carter 6)de différentiel.

– La figure 19 représente une coupe du coupleur(121)montrant le positionnement des galets avec leurs mistons de poussée.

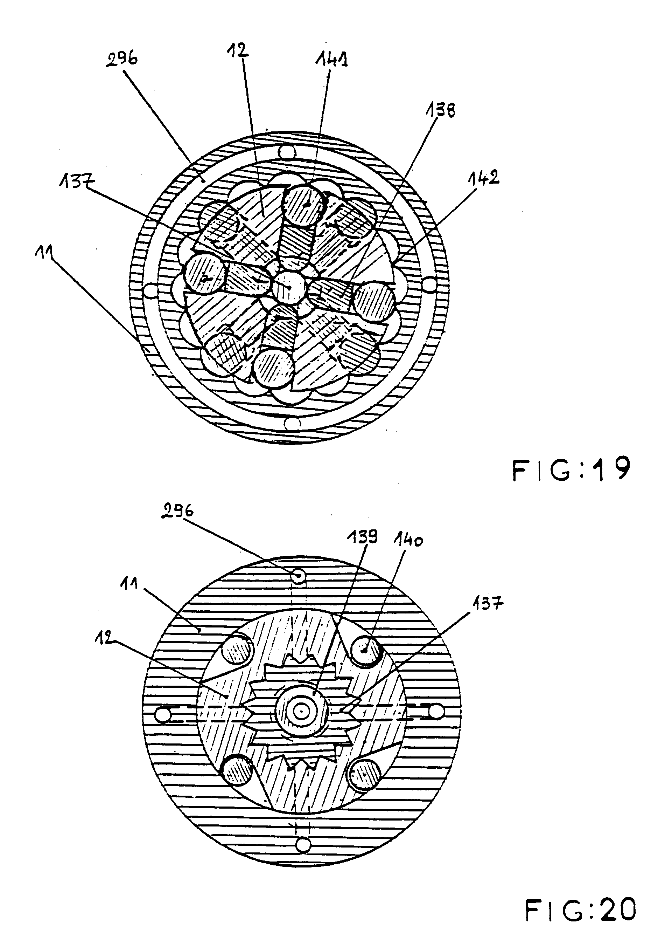

– La figure 20 représente une coupe du coupleur 121)montrant les galets de frein moteur.

– La figure 21 représente l'ensemble du verrouillage du levier de vitesses; la fig:21a une coupe selon aa de la fig.21;la fig:21b une coupe selon bb de la fig.21;la fig:21c une coupe selon cc de la fig.21;la fig:21d une coupe dd de la fig.21.

– La figure 22 représente une coupe de la pompe à huile(122),montrant l' ensemble des clapets d'aspiration et de refoulement.

– La figure 23 eprésente une vue eclatée de la pompe à huile(122).

– La figure 24 représente une vue de l'attelage(246);la fig:24a une coupe salon aa de la fig.24;la fig:24b une coupe selon bb de la fig.24.

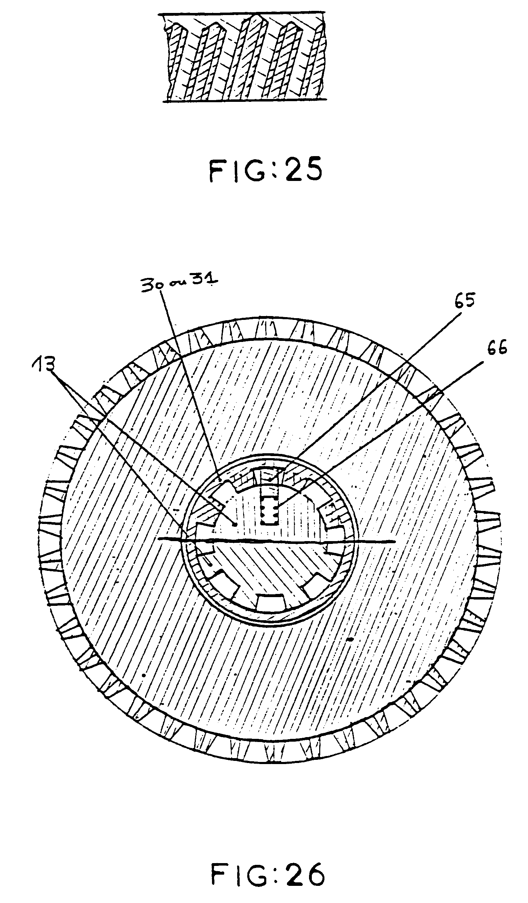

– La figure 25 représente une vue du taillage des pignons de vitesse.

– La figure 26 représente un pignon mobile sur l'arbre secondaire(13) avec une bague de butée verrouillée sur le dit "arbre".

– La figure 27 montre le montage de l'axe(120) de synchronisme à travers un pignon un pignon synchronisateur.

– La figure 28 montre le positionnement des billes et des freins de synchronisme dans l'alésage d'un pignon synchronisateur.

– La figure 29 représente le synoptique de fonctionnement de l'ensemble de la dite"transmission".

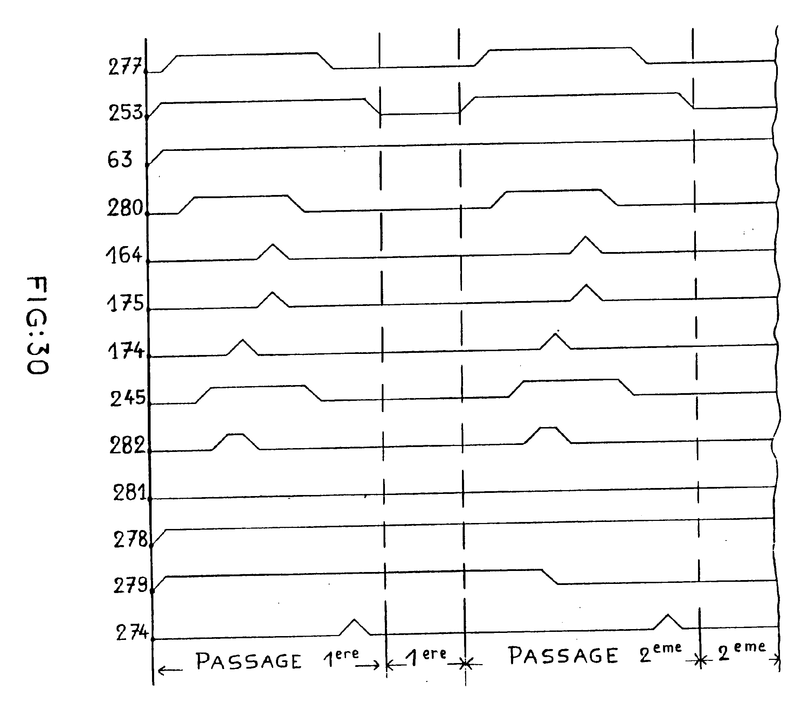

– La figure 30 représente le synoptique de passage des deux premières vitesses,en commande automatique.

Afin de comprendre plus rapidement la lecture de ces deux figures,la liste des éléments repérés,est citée ci-dessous:

| | |
|---|---|
| 1 | -boitier électronique |
| 3 | -sélecteur |
| 63 | -électro-aimant de déverrouillage du levier de vitesses |
| 72 | -plateau de sélection |
| 98 | -clapet anti-retour d'alimentation des pistons de point mort |
| 121 | -coupleur |
| 122 | -pompe à huile |
| 164 | -capteur de rotation de l'arbre primaire |
| 174 | -noyau de placement du plateau de sélection |
| 175 | -capteur de rotation de l'arbre secondaire |
| 215 | -piston d'embrayage automatique |
| 218 | -piston de verrouillage de l'embrayage mécanique |
| 245 | -contact de position de point mort |
| 253 | -électro-aimant de l'attelage du câble accélérateur |
| 261 | -noyau de position de l'accélérateur |
| 263 | -distributeur d'embrayage |
| 264 | -distributeur du coupleur |
| 265 | -distributeur de verrouillage de l'embrayage mécanique |
| 266 | -distributeur d'alimentation du point mort |
| 267 | -distributeur de montée des vitesses |
| 269 | -vérin de placement du plateau |
| 270 | -distributeur de descente des vitesses |
| 271 | -clapet de tarage de l'embrayage |
| 272 | -clapet de tarage du circuit de commande |
| 273 | -limiteur de pression du circuit de commande |
| 274 | -capteur de position de la fourchette d'embrayage |
| 275/1 | -capteur de marche avant ou de montée des vitesses |
| 275/2 | -capteur de marche arrière ou de descente des vitesses |
| 276 | -contact de pression de frein |
| 277 | -électro-aimant du distributeur d'embrayage |
| 278 | -électro-aimant du distributeur de verrouillage de l'embrayage |
| 279 | -électro-aimant du distributeur du coupleur |
| 280 | -électro-aimant du distributeur de point mort |

5

281      -électro-aimant du distributeur de descente des vitesses

282      -électro-aimant du distributeur de montée des vitesses

284      -fourchette d'embrayage

302      -compte-tours

303      -noyau de dépression du moteur

R.D      -relais de démarreur

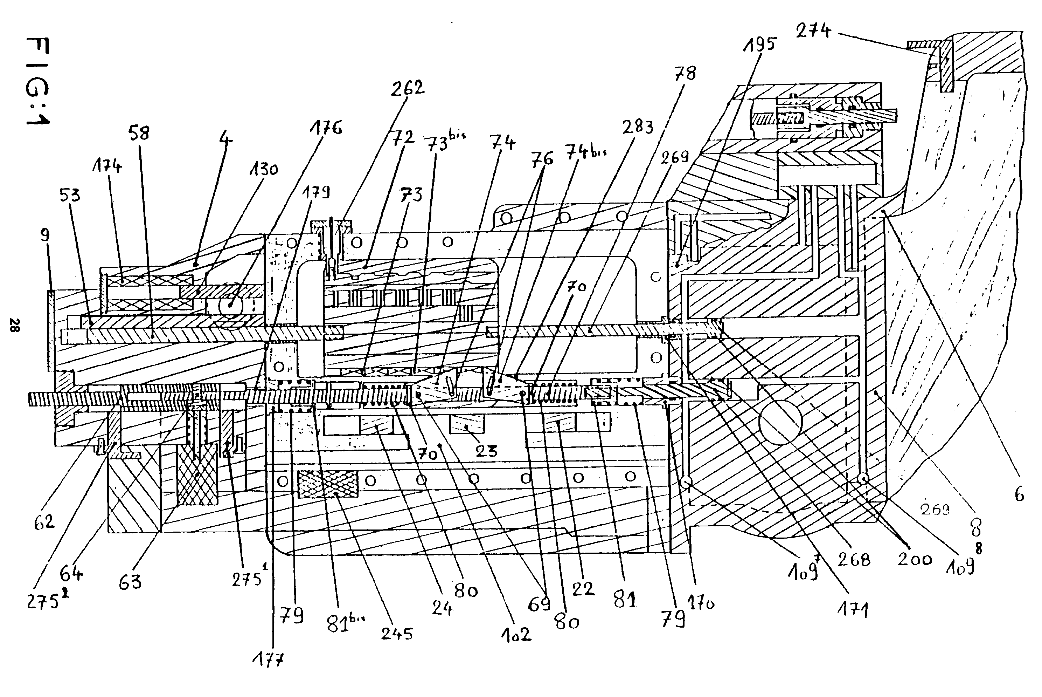

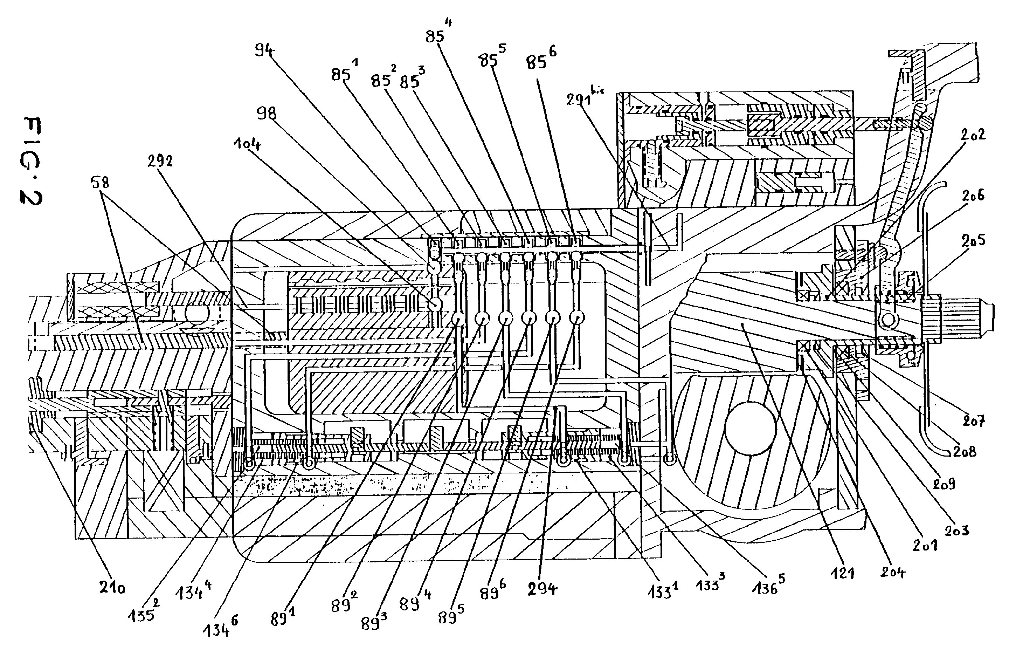

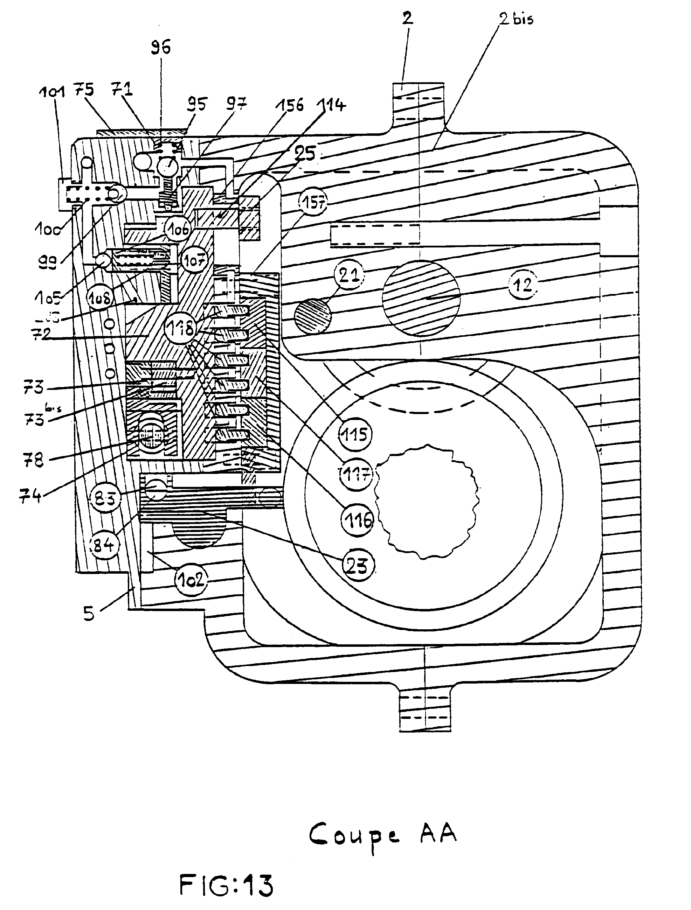

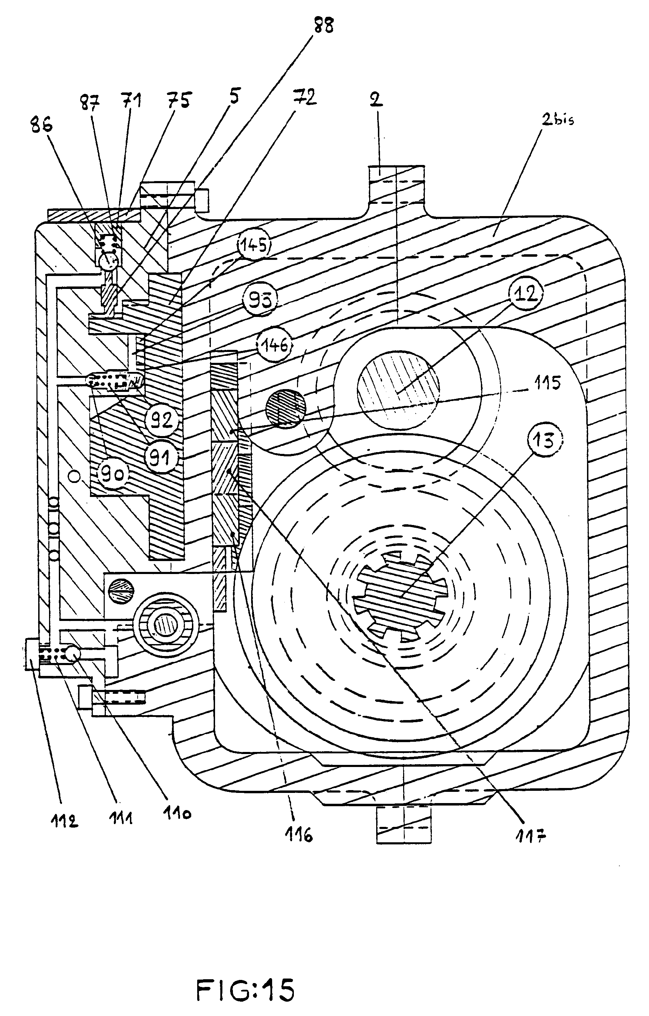

Dans le cas illustré,l'ensemble de transmission à passage assisté des vitesses,automatique,semi-automatique et/ou non manuel à six rapports de marche avant et un rapport de marche arrière est assemblé dans un carter formé de deux demis carters(2et2b.fig:4,6,7,8,13,14,15,16)obtenus directement de fonderie et usinés pour être assemblés et recevoir les roulements (27et26.fig:7)de l'arbre primaire(12.fig:3,7,13,15)sur lequel les pignons sont usinés directement,les roulements(28et29.fig:8)de l'arbre secondaire (13.fig:3,8,15)cannelé sur lequel coulissent les pignons(14,15,16,17,18,19) pour enclencher une vitesse;ces ensembles sont taillés en biais(fig:25)avec un angle d'attaque usiné en retrait de 3mm environ sur 4 dents sur 5 environ; la marche arrière est obtenue par l'intermédiaire du pignon(20.fig:12)fixé sur l'axe(21.fig:12,13,14)qui coulisse pour l'enclencher sur les pignons(14 et14b);sur le demi-carter(2)sont usinés les alésages des pistons(133et134. fig:5,8,11)de passage des vitesses et des pistons(127et128.fig:6,12)de mise au point mort ainsi que les portées des carters(2b,4,5,6);à l'intérieur de cette dite partie,est usinée la portée des fourchettes(115,116,117.fig:8,11, 13,15)de verrouillage des vitesses et de leur carter(157.fig:11,13)de fixation,toujours sur ce demi-carter(2)il est prévu l'usinage de réception du plateau(72.fig:1,4,7,9,10,11,13,15,29)de sélection qui coulisse entre la paroi du demi-carter(2)et le carter(5.fig:4,7,13,15,16)de fermeture,le plateau (72)est déplacé soit par des vérins(268et269.fig:1,4) en commande automatique et semi-automatique,soit par l'axe(78.fig:1,4,13)et son embout(178.fig:4) qui est vérouillé sur le fourreau(62.fig:1,16,21)de commande du levier de vitesses;en commande manuelle,le plateau(72)est déplacé par l'axe(78)sur lequel viennent se fixer un rochet(74.fig1,13)de montée des vitesses et un rochet(74b.fig:1)pour la descente des vitesses pour s'accrocher sur les crémaillères(73et73b.fig:1,13)à sens de travail opposé,fixées sur le plateau(72) qui est usiné d'une came (144.fig:4,5,10,14)d'ouverture des clapets(85.fig: 2,4,6)d'alimentation des pistons de poussée des fourchettes de passage des vitesses,d'une came(145.fig:4,5,10,15)de fermeture des clapets(89.fig:2,4,5,6) de vidange des pistons de poussée des fourchettes,des cames(143.fig:4,5,10,14) du clapet(94.fig:2,4,6)d'alimentation des pistons de point mort ainsi que les cames(67.fig:9,10,14)de déverrouillage des fourchettes(115,116,117.fig:8, 11,13,15)de sécurité et la rainure(68.fig:9,11,14)de commande de marche arrière La sélection des vitesses se fait par le plateau(72)qui se déplace dans le carter(5.fig:4,7,13,15,16)qui est obtenu directement de fonderie avec les conduits d'alimentation d'huile,le dit"carter"est ensuite usiné pour permettre le montage : des clapets(85.fig:6)composés d"un doigt(88.fig:15),d'un ressort (87.fig:15),d'une bille(86.fig:15)et d'un bouchon(71.fig 15);=du clapet(94. fig:2,4)composé d'un doigt(97.fig:13),d'une bille(95.fig:13),d'un ressort(96 fig:13)et d'un bouchon(71.fig:15),ces dits"clapets"(85et94)sont maintenus par la plaque(75.fig :5,13,15);=des clapets(89.fig:5,6)compose d'un doigt (92.fig:15),d'une bille(90.fig:15)et d'un ressort(91.fig:15);=du clapet(104. fig:2,5,6)composé d'un piston(106.fig:13),d'un ressort(107.fig:13),d'une bille(105.fig:13),d'un contre-piston(108.fig:13),ces dits"clapets"(89et104)sont maintenus par la plaque(93.fig:15);=du clapet(98.fig 2,4,5,6) anti-retour composé d'une bille(99.fig:13),d'un ressort(100.fig:13),d'un bouchon(101.fig:13); =des clapets(109.fig:1,5,6,17)de remplissage des pistons,composé d'une bille (110.fig:15),d'un ressort(111.fig:15);au cours de l'usinage du demi-carter(2) il est prévu une réserve d'huile(102.fig:4,13)qui se remplit par le barbotage des pignons de l'arbre secondaire(13).

Tout l'ensemble de sélection sert à pousser une des fourchettes de marche avant ou à enclencher la marche arrière par l'intermédiaire du levier(25.fig: 12,13,14),l'ensemble des fourchettes de marche avant est placé entre l'arbre secondaire(13)et les pistons(133et134.fig:5)à double sens de travail et les pistons(135et136.fig:5)à simple sens de travail,placés sur le flanc inférieur du demi-carter(2);ces dites"fourchette"(22, ,24.fig:1,4,5,8,11,13,14)sont obtenues directement de fonderie et usinées pour aller s'enfourcher dans la gorge de chaque ensemble de pignons de passage des vitesses d'une part ,d'autre part en continuant vers l'autre extremité,une partie est ronde et rectifiée afin de recevoir la fourche de la fourchette de sécurité de chaque piston,ensuite un renfort est usiné en forme de U pour se loger dans la gorge (77.fig:6)de chacun des pistons(133et134.fig:5,6)pour les fourchettes(22,24. fig:8,14)de passage des vitesses;sur la fourchette(23.fig:1 4,5,8,11,13)l'usinage est supprimé pour pouvoir être déplacée par les pistons(135et136.fig:5,6); à l'extrémité de ces dites"fourchettes"est usinée une gorge(82.fig:8)afin de recevoir les axes(83et84.fig:4, 12,13)de mise au point mort;la commande de marche arrière s'effectue par l'intermédiaire de la rainure(68.fig:9,11,14)usinée sur le plateau(72)qui vient basculer le levier(25.fig:12,13,14)obtenu directement de fonderie en forme d'équerre et est fixé sur la paroi intérieure du demi-carter(2)par l'axe(113.fig:12,14)pour loger l'axe(114.fig:12,13)dans la rainure(68.fig:9,11,14)d'une part et d'autre part dans l'usinage prévu à cet effet sur l'axe(21.fig:12,13,14)de commande du pignon(20.fig:12)balladeur. Afin de faciliter le passage des vitesses,un

EP 0 365 607 B1

ensemble de mise au point mort des fourchettes est placé dans la partie inférieure du carter(5.fig:4,7,13,15, 16)de sélection et constitué de deux axes(83et84.fig:4,12,13)qui viennent se poser dans les gorges(82 ig:8)des fourchettes(22,23,24.fig:8)afin de les ramener en position repos par l'interemédiaire des épaulements(103.fig:4,12) prévus à cet effet sur les axes(83et84)qui sont poussés par les ressorts(180. fig:12)placés à l'intérieur des pistons(127et128.fig:6,12)qui entrent en service entre chaque passage des vitesses soit par l'intermédiaire du plateau(72)qui ouvre le clapet(94,fig:2,4,6)pour les alimenter,soit par le distributeur(266.fig:6,18,29).

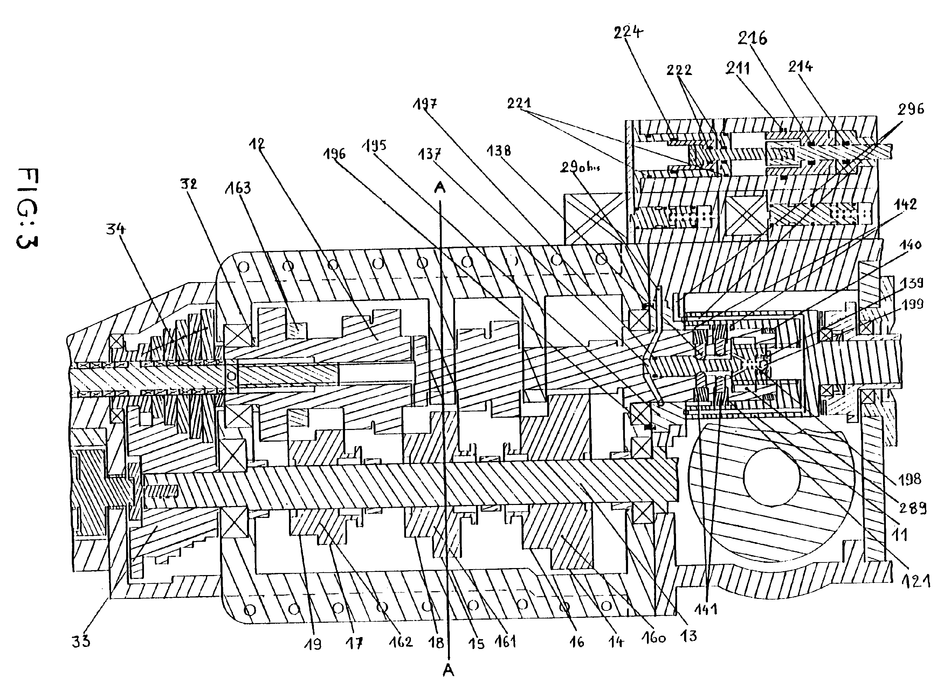

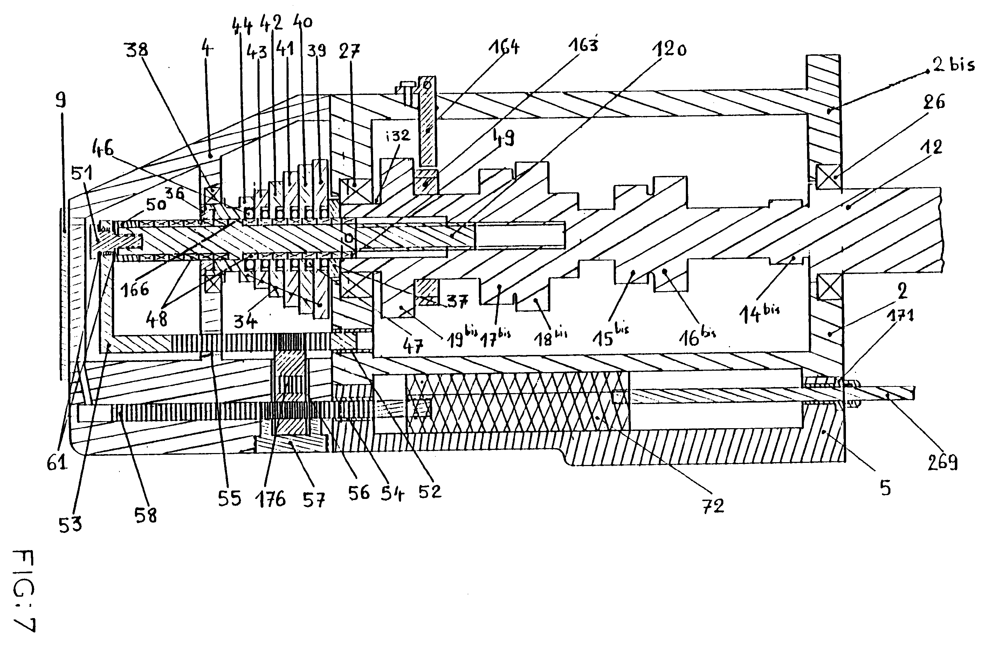

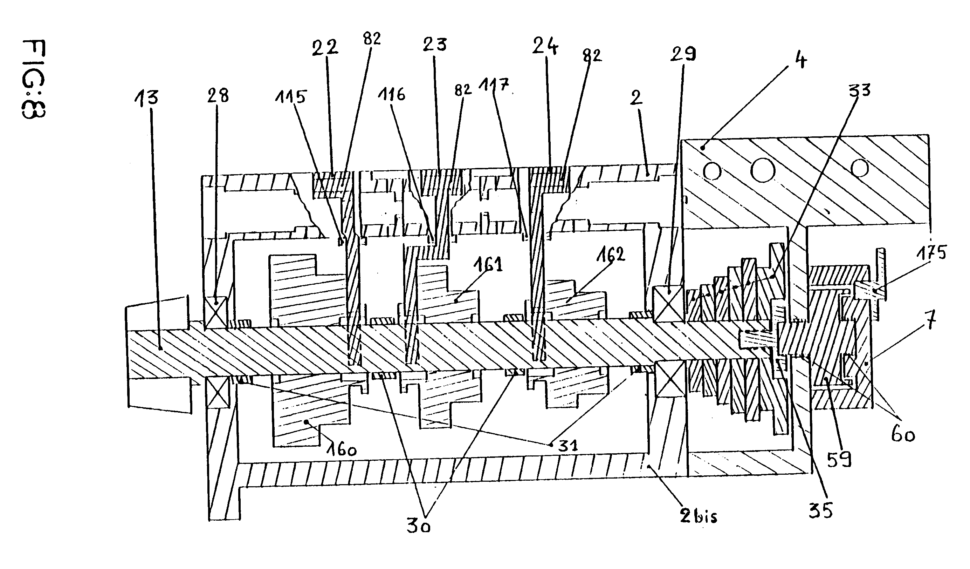

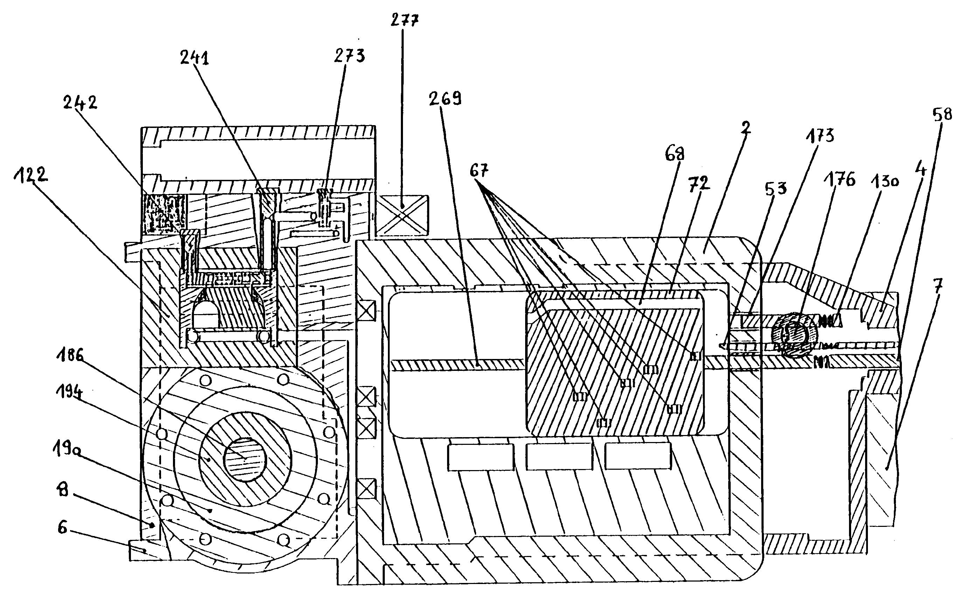

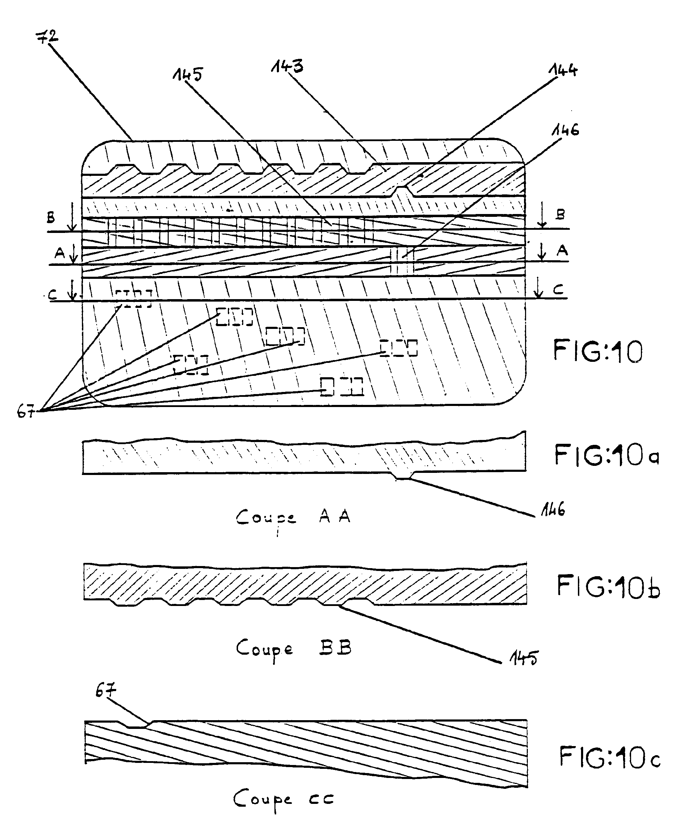

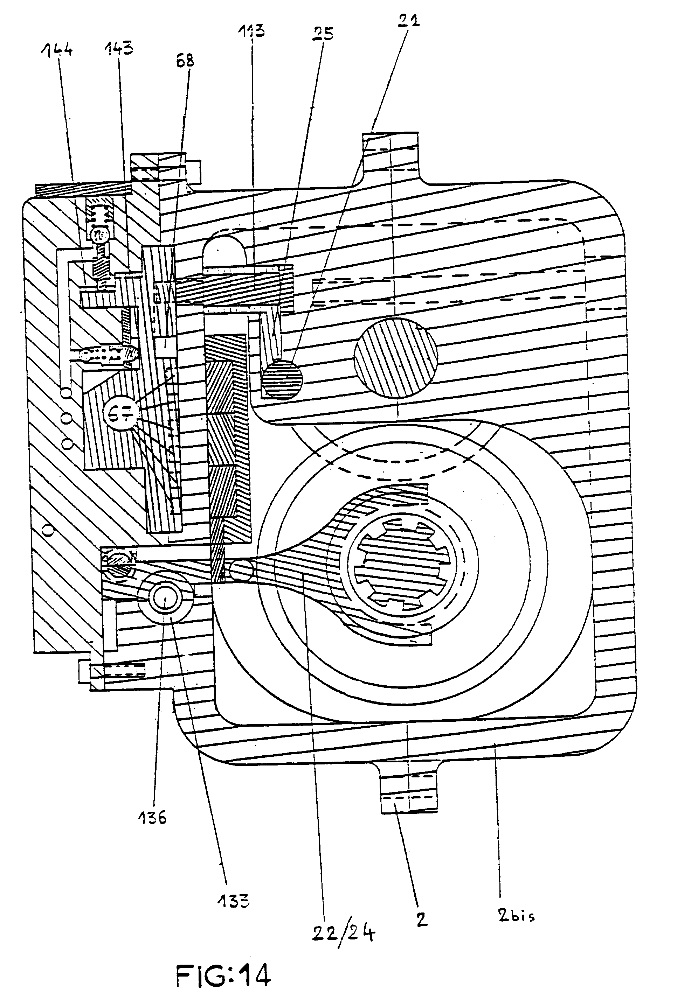

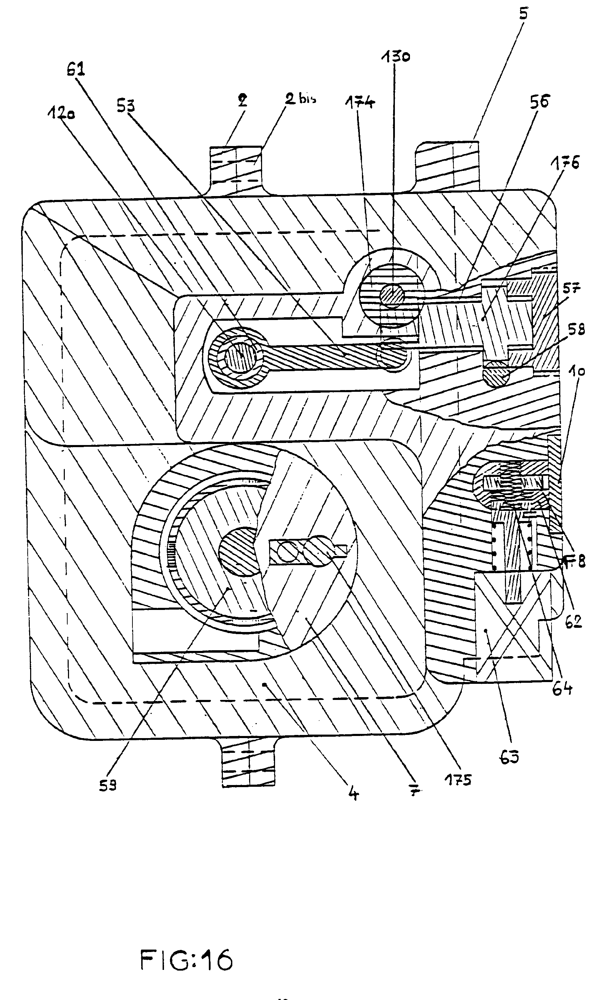

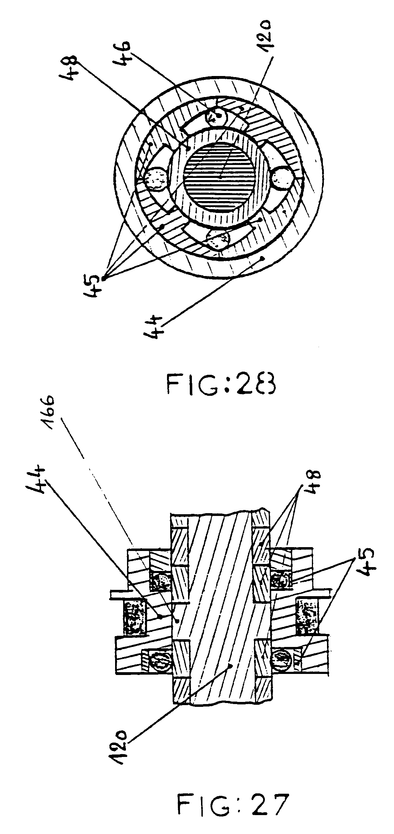

Afin d'éviter toute défaillance du système de sélection qui entrainerait la poussée simultanée de deux ou plusieurs pistons de commande des vitesses,un ensemble de sécurité est placé contre la paroi intérieure du demi-carter(2) et est constitué de fourchettes(115,116,117.fig:8,11,13,15)obtenues directement de fonderie en forme d'équerre et ensuite usinées d'une part d'une fourche pour s'enclencher sur les fourchettes(22,23,24)de déplacement des pignons et d'autre part sur l'autre aile,deux lumières servent de déverrouillage aux dites"fourchettes"(22,23,24)par l'intermédiaire des doigts(118.fig: 11,13)qui s'enclenchent à l'intérieur et sont plaqués par le plateau(72);sur le dit"plateau" des cames(67.fig 9,10,14)de dégagement correspondent avec l' emplacement du plateau par rapport à la vitesse sélectionnée afin de dégager le doigt(118.fig :11,13)correspondant par l'intermédiaire de la pression d' huile qui est permanente,donc une seule vitesse peut passer à la fois. pour permettre l'enclenchement des pignons mobiles sur les pignons fixes de l'arbre primaire(12),un ensemble de synchronisme est commandé par le déplacement du plateau(72),placé à l'arrière de la dite"transmission",il est assemblé dans un carter(4.fig 1,7,8,9,16)où sont prévus les alésages du roulement (38.fig 7)et de passage des axes(53,58,130)ainsi que l'usinage de la commande du levier de vitesses:cet ensemble de synchronisme est constitué d'un ensemble de pignons(33.fig 3,8)fixes placé en bout de l'arbre secondaire(13)et un ensemble de pignons(34.fig:3,7)mobiles placés sur l'axe(120. fig 7,16)coulissant dans l'alésage prévu sur chaque pignon de cet ensemble et dans l'arbre primaire(12)qui l'entraine pour venir bloquer le pignon correspondant à la vitesse sélectionnée car les deux ensembles s'engrenant ensemble forment les X rapports de la dite"transmission";l'axe(120.fig 7,12, 16,27,28)se déplacant par l'intermédiaire du plateau(72)de sélection. Le carter(6.fig:1,6,9,17,18)de différentiel est obtenu directement de fonderie avec les conduits et usiné ensuite pour recevoir l'ensemble des distributeurs,les vérins(268et269.fig:1,4)de commande du déplacement du plateau(72)et l'ensemble de commande de l'embrayage,sur un côté,est prévu le passage de la pompe à huile(122.fig:9,17,18,22,23),le dit"carter" est ouvert à l'avant et férmé ensuite par la plaque(8.fig:1,5,9)porte-butée(147.fig:5) d'embrayage;les dits"distributeurs"sont usinés pour recevoir leur piston respectif(149.fig-:5)avec leur ressort (148.fig:5)

La pompe à huile(122.fig:9,17,18,22,23)qui vient se placer dans la partie supérieure du carter(6)de différentiel,est entrainée directement par l'arbre moteur et est constituée par un corps(123.fig:22,23)obtenu directement de fonderie et ensuite usiné pour recevoir à l'intérieur le rotor(124.fig:22,23) qui est entrainé par l'axe(125.fig:22,23)solidaire du pignon(126.fig:17,23) afin d'aspirer l'huile par les clapets(131.fig:17,23)et de la refouler par les clapets(132.fig:17,23),la dite"pompe est pilotée d'une part par le piston(235. fig:23)et son ressort(230) et d'autre part par le piston(239.fig:23)et son ressort(231).

Pour permettre le démarrage ou l'arrêt du véhicule en circulation dans le cas d'un passage des vitesses à commande automatique,il est prévu un coupleur(121.fig:2,3,5,19,20)placé entre l'arbre primaire(12)et l'arbre de sortie (11.fig:3,5,19,20)d'embrayage et qui est constitué de galets(141.fig:3,19) placés sur l'arbre(12)pour venir se bloquer progressivement dans le creux des cames(142.fig:3,19)par l'intermédiaire de la pression d'huile.A l'intérieur de l'embout de l'arbre(12)le piston(137.fig:3,19)se déplace pour verrouiller les deux parties;sur l'arbre(12)il est prévu des galets(140.fig:3,20)qui empêchent la traction d'aller plus vite que le régime moteur.

Afin de pouvoir commander le passage des vitesses dans n'importe quel mode de sélection,un ensemble d'asservissements vient se fixer sur la partie supérieure du carter(6)de différentiel et est composé d'un piston(233.fig:5)d'embrayage commandé par la pédale d'embrayage,d'un piston(215.fig:5,17)commandé à partir du distributeur(263.fig:6),d'un distributeur(264.fig:6)de commande du coupleur (121),d'un distributeur(265.fig:6)de verrouillage du piston(223)d'embrayage, d'un distributeur(266.fig:6)d'alimentation des pistons de poussée des fourchettes de passage des vitesses et de point mort,d'un distributeur(267.fig:6) de déplacement du plateau(72)pour les vitesses montantes,d'un distributeur (270.fig:6)de déplacement du plateau(72)pour les vitesses descendantes.

Afin de régler cet ensemble,il est prévu un clapet(271.fig:6,18)de réglage de pression du piston(215)d'embrayage,un clapet(272)fig:6)de réglage de pression de poussée sur les vérins(268et269)de déplacement du plateau(72)ainsi qu'un limiteur(273.fig:6)de pression de poussée sur les pistons de déplacement des fourchettes de passage des vitesses.

Pour commander tout cet ensemble d'asservissement,un sélecteur(3.fig:29) vient alimenter le boitier(1.fig:29)qui reçoit les informations données: =par le capteur(164.fig:8,16)de rotation de l'arbre pri-

7

maire(12);=par le capteur(175.fig:8 16)de rotation de l'arbre secondaire(13);=par le capteur (274.fig: ,5)de position de la fourchette(284.fig:5)d'embrayage;=par le noyau (174.fig:1,16)de placement du plateau(72);=par le contact(245.fig:1,12)de position du système de point mort;=par les capteurs(275/1et275/2.fig:1,21) de commande de sens de marche;=par le noyau(261.fig:24) de course de la pédale d'accélérateur;=par le contact de pression de freinage(276.fig:29); =par le compte-tours et la dépression du moteur pour ensuite commander =l'électro-aimant(277.fig:6)du distirbuteur(263)d'embrayage;=l'électro-aimant (278.fig:6)du distributeur(265) de verrouillage du levier de vitesses;=l'électro-aimant(279.fig:6)du distributeur(266)d'alimentation générale des clapets (85et94);=l'electro-aimant(281.fig:6)du distributeur(270)de descente des vitesses;=l'électro-aimant(282.fig:6)du distributeur(267)de montée des vitesses; =l'électro-aimant(253.fig:24)de l'attelage(246)du câble accélérateur.

Afin de compléter la description de la dite"transmission",le montage est réalisé élément par élément;cet assemblage s'effectue en prenant le demi-carter (2)pour poser les joints(150.fig:6)afin de recevoir les pistons(133et134.fig: 5,6)et leurs joints(155.fig:6)assemblés sur les corps de pistons(153et154.fig: 5,6)équipés de leurs joints(151.fig:6)et les pistons(135et136.fig:5,6)et leurs joints(152.fig:6)après les avoir glissés à travers les pistons(133et134)et les corps de piston(153et154),poser les fourchettes(22,23,24.fig:4,5,9)à leur emplacement dans les gorges des pistons(133et134),poser les fourchettes(113, 14,115.fig:8,11,13,15)de verrouillage puis fermer l'ensemble de ces dites" fourchettes"avec le carter(157.fig:11,13)après posé la bague (156.fig:11,13), prendre l'axe(21.fig:12,13,14)de commande de marche arrière et le monter en prenant soin de glisser le pignon(20.fig:12),glisser le levier(25.fig:13,12, 14)de commande de marche arrière pour le fixer sur le demi-carter(2)avec l'axe(113.fig:12,14),fixer le doigt(114.fig:12,13)sur le levier(25)et le pignon(20)sur l'axe(21)avec les billes(158.fig:12)et les bouchons(159.fig:12) en prenant soin de conserver le pignon(20)libre de rotation;prendre l'arbre secondaire(13),glisser le roulement(28.fig:8),la bague(31.fig:8,26)de butée qui est verrouillée par le doigt(65.fig:26)et son ressort,l'ensemble de pignons(161.fig:3,8),la bague(30.fig:8,26)et son vérouillage,l'ensemble de pignons(162.fig:3,8),la bague(31.fig:8,25)et son verrouillage et enfin le roulement (29.fig:8);prendre cet assemblage et le poser sur le demi-carter(2) en prenant soin de placer chaque fourchette de déplacement des pignons dans sa gorge;prendre l'arbre primaire(12)et monter la bague(163.fig:3)du capteur (164.fig:7)avant de le poser sur le demi-carter(2)après avoir glisseé le roulement(26.fig:7)d'une part et le roulement(27.fig:7)et la rondelle(32.fig:7) d'autre part;ces opérations terminées prendre le deuxième demi-carter(2b)et refermer l'ensemble.Prendre le carter(5.fig:4,7,13,15,16)de sélection,glisser l'axe(78.fig:1,4,13)dans l'alésage(165.fig:4)arrière du carter(5),côté opposé à l'épaulement de butée jusqu'à ressortir dans le dégagement(167.fig:4)prévu pour les rochets(74et74b.fig:1,13)pour faire coulisser le premier ressort(80. fig:1),la rondelle(70.fig:1),la deuxième rondelle(70)et le deuxième ressort (80),pousser l'axe(78.fig:1,4,13)jusqu'à ressortir dans l'alésage(169.fig:4) opposé,ensuite prendre le rochet(74.fig:1,13)le fixer sur l'axe(78)par son axe(69.fig:1)de pivotement en pressant le ressort(80)avec sa rondelle(70), fixer sa butée(76.fig:1)de maintien,passer au deuxième rochet(74b.fig:1)et le fixer sur l'axe(78)avec son axe(69)ainsi que sa butée(76);continuer l'assemblage de l'ensemble du carter(5)de sélection en glissant les billes(105.fig: 13)et(90.fig:15)des clapets(104.fig:2,5,6)et(89.fig:5,6)de vidange pour assembler le clapet(104)avec son piston(106.fig:13),son ressort(107.fig:13),et son contre piston(108.fig:13),les clapets(89)avec les ressorts(91.fig:15)et les pistons(92.fig:15),tout cet ensemble de clapets est maintenu par la plaque(93.fig:15)fixée sur le carter(5);prendre les axes(83et84.fig:4,12,13)de point mort et les poser dans les gorges(82.fig:8)prévues sur les fourchettes (22,23,24.fig :4,5,8,11);assembler les crémaillères(73et73b.fig:1,13)dans leur sens respectif sur le plateau(72.fig:1,4,7,9,10,11,13,15)avant de le poser dans son coulisseau où les doigts(118.fig:11,13) de verrouillage sont montés auparavant,refermer l'ensemble avec le carter(5)assemblé;fixer le vérin (268.fig:1,4)en bout de l'axe(78)de commande avec la butée(81.fig:1)de point mort,le ressort(79.fig:1)de rappel et le fourreau(170.fig:1)porte-joint du vérin(268),fixer la bague(54.fig:7)guide de l'axe(5 fig:1,2,4,7,9,16)de commande du système de synchronisme avant de le fixer sur le plateau(72)de selection;prendre le fourreau(171.fig:1,7)porte-joint du vérin(269.fig:1,4,5,9,17) de déplacement du plateau et le fixer sur le carter-(2)avant de fixer le vérin sur le plateau(72);procéder au montage de chaque clapet(109.fig:1,5,6,17)avec sa bille(110.fig:15),son ressort(111.fig:15)et son bouchon(112.fig:15);du clapet(98.fig:2,4,5,6)avec sa bille (99.fig:13),son ressort(100.fig:13)et son bouchon(101.fig:13),de chaque clapet(85.fig:2,4)en prenant soin de glisser les doigts(88.fig:15)de poussée des billes(86.fig:15),les ressorts(87.fig:15)et leurs guides(71.fig:5,13, 15);du clapet(94.fig:2,4)avec sa bille(95.fig:13),son doigt(97.ig:13),son ressort(96.fig:13)et son guide(97.fig: 13);tout cet ensemble de galets(85et94)est maintenu par la plaque(75.fig:5,13,15).

Avant de procéder à l'assemblage de l'ensemble du synchronisme,monter la bague (52.fig:7)du levier (53.fig:1,7,9,16)de commande du synchronisme,la bague(55. fig:7)du levier(53)sur le carter(4.fig:1,7,8,9,16) ainsi que la bague(173.fig:9) de l'axe(130.fig:1,9,16)du noyau(174.fig:1,16)de placement du plateau(72)sur le demi-carter(2);prendre l'axe(120.fig:7,12,16,27,28)cannelé,glisser les bagues(48.fig:7,27,28)mobiles et les maintenir fixées sur l'axe(120)par la bague(49.fig:7)et sa goupille d'une part et par la bague(50.fig:7)fixée par la vis(41.fig:7)qui sera redémontée ultérieurement;prendre le pignon(44.fig:7,27, 28)synchronisateur de 1ère,le glisser sur l'ensemble des bagues(48)mobiles en prenant soin de glisser les patins(45.fig:27,28)et les billes(46.fig:7),continuer en glissant le pignon(43.fig:7)de 2ème avec ses patins(45)et ses billes (47.fig:7),le pignon(42.fig:7)de 3ème avec ses billes(47),le pignon(41.fig:7)de 4ème avec ses patins(45)et ses billes,le pignon(40.fig:7) de 5ème avec ses billes(47),le pignon(39.fig:7)de 6ème avec ses patins(45)et ses billes(47),la rondelle(37.fig:7)de maintien des billes; prendre cet assemblage et le glisser dans l'alésage cannelé de l'arbre primaire; prendre l'ensemble des pignons synchronisateurs(33.fig:3,8)et le fixer sur l'arbre secondaire(13)avec la vis(35.fig:8);prendre le carter(4.fig:1,7,8,9,16) du synchronisme,monter la bague(56.fig:16,7)de fonctionnement du pignon(176.fig:1,7,16)réducteur,la bague(36.fig:7)avec le roulement(38.fig:7),ensuite la bague(81.fig:1),le ressort(79.fig:1),le fourreau porte-joint(177.fig:1)sur le carter(5)de sélection;cette opération terminée,poser le piston(127.fig:6,12) de point mort équipé de son point et de son ressort(180.fig:12)dans son alésage prévu sur le demi-carter(2)avant de fixer le carter(4)de synchronisme sur l'ensemble principal;placer l'embout(178.fig:4,16,20)de l'axe(78),redémonter la vis(51)pour poser le levier(53.fig:1,7,9,16)de commande du synchronisme en plaçant les rondelles(61.fig:7)afin de le fixer sur l'axe(120)avec la vis(51), glisser l'axe(130.fig:1,9,16)de contrôle du placement du plateau(72),monter le pignon(176.fig:1,7,16)réducteur en respectant l'emplacement du plateau(72)vis à vis du levier(53) et de l'axe(130)de contrôle et le maintenir avec le bouchon57.fig:7,16);monter la bague(60.fig:8)du pignon tachymètrque(59.fig 8) sur le carter(4)de synchronisme et la deuxième bague(60.fig:7)sur le carter (7.fig:7)qui est ensuite fixé sur le carter(4)après avoir mis le pignon(59) servant d'émetteur au capteur(175.fig:8,16)de vitesse,fermer le carter(4)avec la plaque(9.fig:1,7).

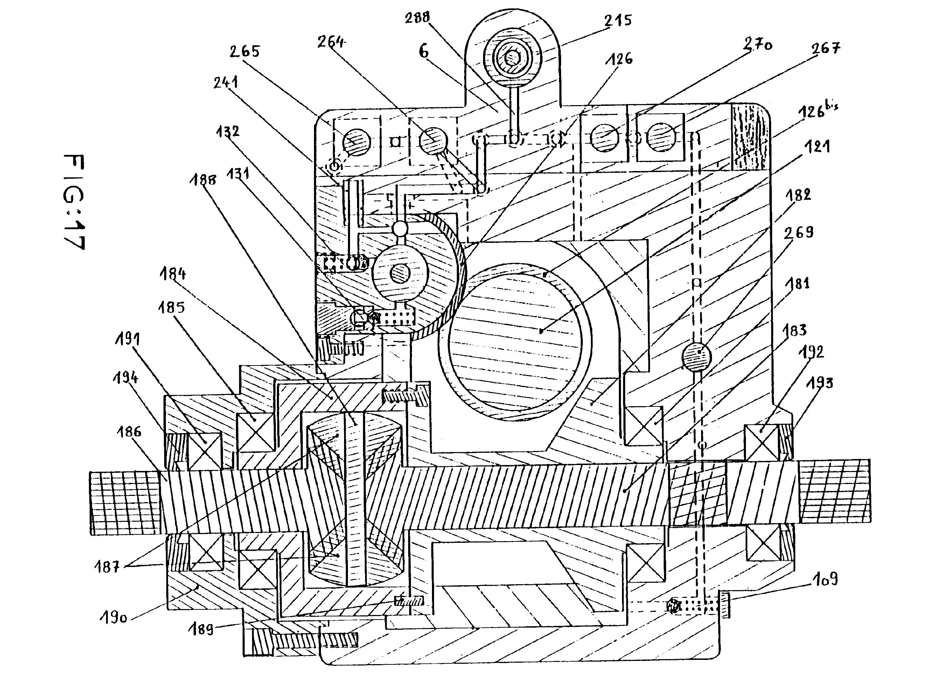

Prendre le carter(6.fig:1,9,17,18)de différentiel et procéder à l'assemblage en fixant le roulement(181.fig:17)sur le bloc grande couronne(182.fig:17), glisserl'arbre de sortie(183.fig:17)à l'intérieur,prendre le support différentiel(184.fig:17)pour monter le roulement(185.fig:17)et glisser la deuxième sortie de transmission(186.fig:17)poser les deux satellites(187.fig:17)montés libres sur l'axe(188.fig:17),prendre le bloc couronne pour fermer le différentiel après l'avoir positionner avec les tétons(189.fig 17);prendre cet ensemble et le glisser dans le carter(6)par l'alésage opposé à la grande couronne pour mettre le roulement(181)dans son alésage,monter le roulement(191. fig:17)et le joint(194)sur le flasque(190.fig:17)pour le fixer sur le carter (6),monter le roulement(192.fig;17)et le joint(193).

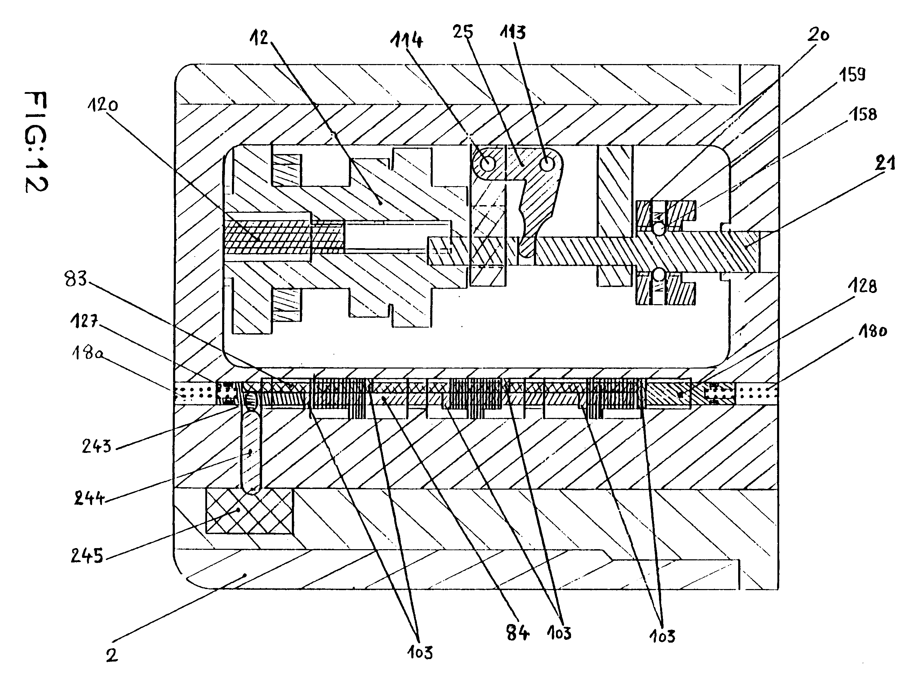

Procéder à l'assemblage du coupleur(121.fig:2,3,5,17)en positionnant la bague (195.fig:1,3)avec ses tétons(196.fig:3),poser le piston(137.fig:3,19)équipé de son joint(197)et du gicleur(139.fig:3,20)avec son ressort(198.fig:3)et sa bille (199.fig:3)ensuite poser les pistons(138.fig:3,19,20)ainsi que les galets(141.fig:3,19)et(140.fig:3,20)enduits de graisse afin de les maintenir pour glisser l'arbre(11)de sortie d'embrayage dessus,monter le pignon d'attaque,le piston (128.fig:6,12)de point mort avec son oint aisi que son ressort(180.fig 12) dans l'alésage prévu sur le demi-carter(2),monter ls joints(200.fig:1)sur les vérins(268et269.fig:1 4)en les huilant et les joints d'assemblage pour fixer l'ensemble sur l'ensemble principal;ensuite glisser le roulement(201.fig:2)sur l'arbre(11)de sortie pour recevoir l'entrainement(202.fig:2)de pompe à huile avec son joint(203.fig 2)après avoir mis la butée(204.fig:2)et la douille(205. fig:2) fermer le carter(6)de différentiel avec la plaque(8.fig:5,9),poser la rondelle(209.fig:2)de réglage de jeu avant de monter le fourreau(206.fig:2) équipé de son joint(207.fig:2)et de son roulement(208.fig:2);poser la fourchette(284.fig:5)et la butée(147.fig:5);fixer la commande(62.fig:1,16,21)de levier de vitesses avec la plaque(10.fig 16)et le guide(210.fig:2,21)sur le carter(4)de synchronisme.

Procéder à l'assemblage des pistons d'embrayage après avoir monté la bague(213. fig:5)et son joint(214.fig:3)en force sur le carter(6)de différentiel poser le joint(211.fig:3)avant de glisser le piston(215.fig:5),poser le piston(218.fig: 5,18)et son joint(219.fig:5)avant de monter le cylindre(220.fig:5)et ses joints(221et222.fig:3),glisser le piston(223.fig:5 18)avec son joint(224.fig:3)dans le cylindre(220.fig:3)et l'axe(225.fig:5)qui est fixé sur l'axe(217.fig:5),fermer l'ensemble avec la plaque(226.fig:5)et fixer l'axe(217)sur la fourchette (284.fig:5)avec l'attelage(227.fig:5)et son contre-écrou(228.fig:5).

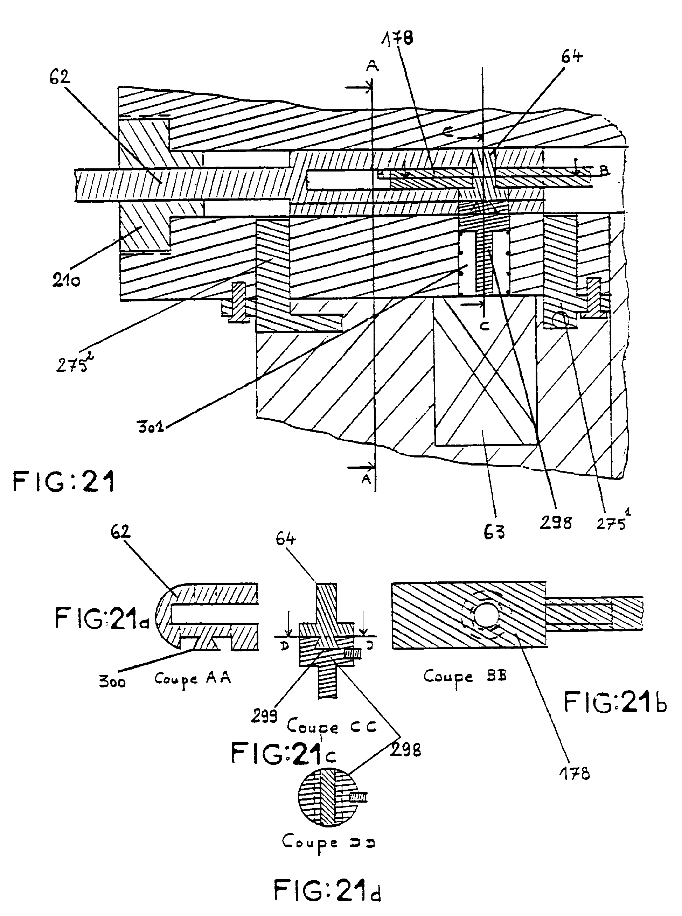

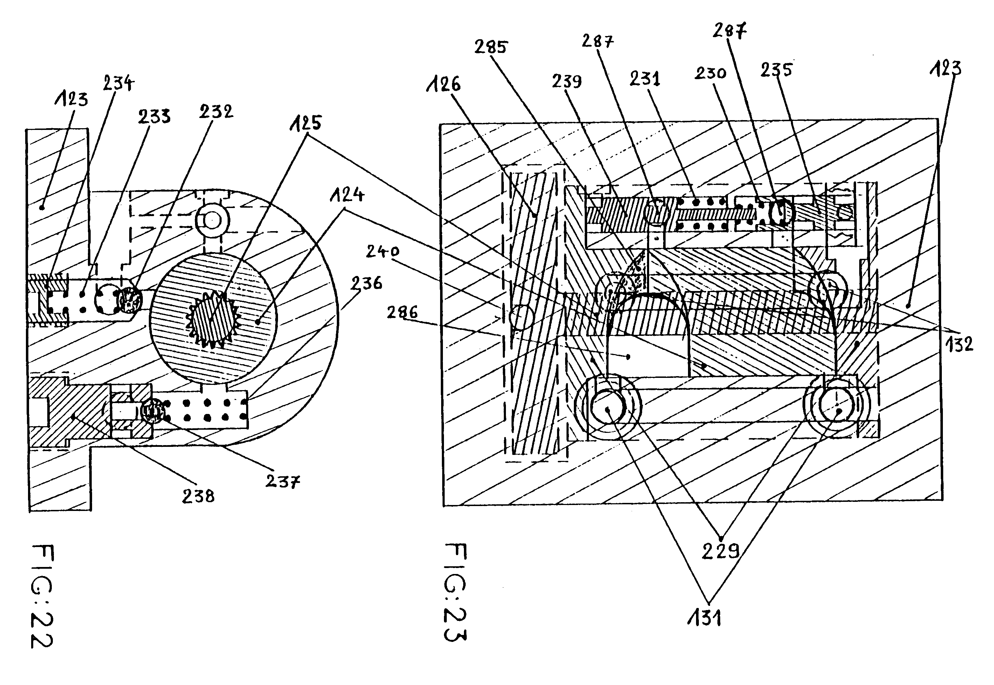

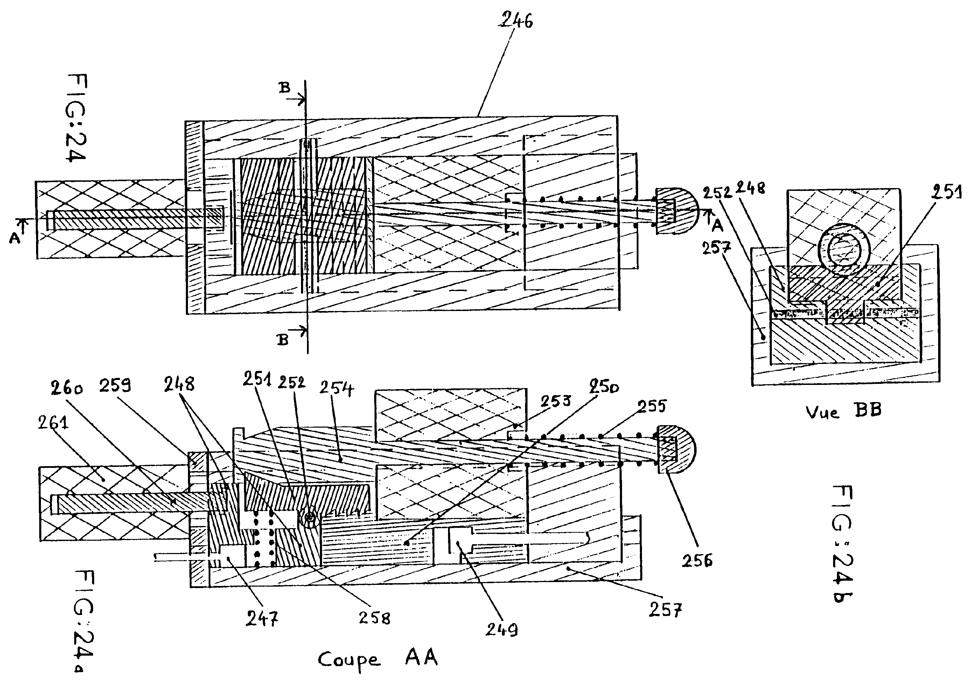

Procéder au montage de la pompe à huile(122.fig:9,18)en prenant le corps de pompe(123.fig:22,23),glisser le rotor(124.fig 22,23)à l'intérieur et le refermer avec les deux flasques(229.fig:23)après avoir monté les pistons(235et239. fig.23)de pilotage et leurs ressorts(230et231.fig:23)respectifs,poser les billes(232.fig:22),les ressorts(233.fig:22)maintenus par les bouchons(234.fig:22) pour les clapets(132.fig:17,23)de refoulement et les ressorts(236.fig:22)avec les billes(237.fig:22)et leurs gicleurs(238.fig:22)pour les clapets(131.fig:17 23)d'aspiration,monter l'axe(125.fig:22,23)solidaire du pignon(126.fig: 17,23) à travers les flasques(229)et le rotor(124),prendre la pompe à huile et la fixer sur l'ensemble en prenant soin d'intercaler la bille(240.fig:23)entre l'axe (125.fig:22)et le carter(6)de differentiel;monter les raccords(241.fig:6,9) et(242.fig:6,9)avec leurs joints respectifs.

Monter l'ensemble des distributeurs avec leurs pistons et leurs joints dans leurs logements respectifs,les clapets de réglage de pression,les clapets d' aspiration,de refoulement,les clapets anti-retour;monter l'axe(64;fig:1,16,21) et son crochet(299.fig:21c)de verrouillage du levier de vitesses,le verrouillage (262.fig:1.4)du plateau(72)en marche arrière,l'ensemble des électrc-aimants, l'ensemble des capteurs ainsi que le doigt(243.fig:12)et le poussoir(244.fig:12) de point mort.

L'assemblage de l'attelage(246.fig:24)du câble accélérateur est éffectué en fixant le câble(247.fig:24a)sur le crochet(248.fig:24a,24b)et le câble(249.fig: 24a)sur le crochet(250.fig:24a),fixer le taquet(251.fig:24a.24b) sur le crochet (250)par l'axe(252.fig 24a,24b),l'électro-aimant(253.fig:24a)équipé de sa came (254.fig:24a)et de ressort(255.fig:24a)maintenu par l'écrou(256),glisser ces ensembles sur le support(257.fig:24a,24b)en prenant soin de poser le ressort (258.fig:24a)ensuite poser la plaque(259.fig:24a)et l'axe(260.fig:24a)sur le crochet(250.fig:24a)avant de poser le noyau(261.fig:24a)de course de l'accélérateur.

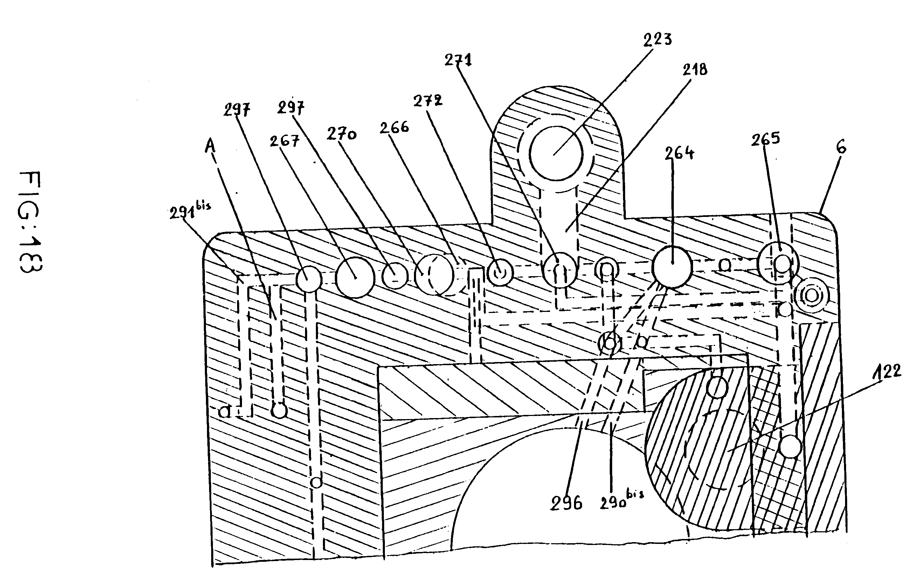

Fonctionnement de la pompe à huile(122.fig 9,18).

La pompe à huile est directement entrainée par l'arbre moteur pour aliment , dès la miss en route du moteur,la commande de l'ensemble de la dite "transmission".

La dite"pompe"est entrainée par le pignon(126.fig:17,23)qui vient faire tourner le rotor(124.fig:22,23),à l'intérieur du corps(123.fig:22.23)de pompe, fermé par deux flasques(229.fig:23)usinés en forme de cames(285.fig:23)afin de déplacer le rotor(124)latéralement pour former deux chambres(286.fig:23) d'aspiration,l'huile est aspirée à tour de rôle dans les chambres(286)par les clapets(131.fig:17,23)pour être refoulée par les clapets(132.fig:17,23),afin d'éviter un recyclage trop important un premier pilotaoe(235.fig:23)vient limiter la pression à environ 3 bars dans le circuit d'alimentation des pistons de passage des vitesses et de point mort;dès que la pression est atteinte,le ressort(230.fig:23),taré à cette pression,laisse le piston(235.fig:23)se déplacer pour mettre la chambre(286/1.fig:23)à l'air libre par l'orifice(287/1. fig:23);dès que la pression descend,le pilotage revient pour réamorcer la chambre(286/1),pendant la période où le débit d'huile nécéssaire est minimum, la chambre(286/2.fig:23)tourne à l'air libre,sans débit et dès que l'alimentation du distributeur(264.fig:6)du coupleur(121.fig:2,3,5,17)ou de l'embrayage est sollicitée,la pression vient pousser le deuxième pilotage(239.fig:23)qui pousse le pilotage(235)afin d'obtenir un débit et une pression maximum de la pompe,l'alimentation de la commande des pistons est limitée par le clapet(273. fig:6,9).

Fonctionnement de l'ensemble de synchronisme.

Le synchronisme se fait par l'intermédiaire de pignons placés à l'arrière de la dite"transmission"dont un ensemble est monté fixe sur l'arbre(13)secondaire et un ensemble est monté libre sur l'arbre primaire(12),ces deux ensembles s' engrennent ensemble pour obtenir les rapports des N vitesses de la transmission pour obtenir la vitesse de synchronisme,il suffit de bloquer le pignon synchronisateur correspondant à la vitesse sélectionnée,pour cela un axe(120.fig:7, 12,16,27,28)usiné d'un épaulement(166.fig:7,27)de la largeur d'un pignon est entrainé par l'arbre(12)primaire et se déplace à l'intérieur de ce dit"arbre" et des pignons synchronisateurs- .Pour obtenir la vitesse de synchronisme d'une vitesse,le plateau(72)pousse l'axe(58.fig:1,2,4,9,16)qui transmet le mouvement au levier(53.fig:1,7,9,16)de commande de l'axe(120),par l'intermédiaire du pignon(176.fig:1,7,16)réducteur pour placer l'épaulement(166)de l'axe(120)sur les billes(46ou47.fig:7,28)qui bloquent les freins(45.fig:27,28)sur le pignon de la vitesse sélectionnée;car chaque emplacement du plateau(72)correspond à une vitesse,chaque position correspond à une profondeur X définie pour chaque Fonctionnement de l'attelage du câble d'accélérateur(246.fig:24).

L'attelage,étant fixé dans le circuit d'accélérateur,oblige à avoir un câble en deux parties,une première partie vient entre le volet d'admission d'air et le crochet(248.fig:24a,24b)coulissant et la deuxième partie vient de la pédale pour se fixer au crochet(250.fig:24a)support de l'électro-aimant(253.fig 24a,24b)et coulissant lui aussi dans le coulisseau(257.fig:24a,24b);en position repos de l'électro-aimant(253),la came(254.fig:24a)appelée par le ressort (255.fig;24a)verrouille le taquet(251.fig:24a,24b)sur le crochet(248)et laisse l'ensemble se déplacer dans le coulisseau(257.fig:24a.24b);dès que l'électro-aimant(253)est appelé,la came(254)vient appuyer sur le talon du taquet(251)et le ressort de rappel désolidarise les deux parties(248et250);quand l'alimentation de l'électro-aimant s'arrête la came(254)ramène le crochet(248)en s'accrochant sur le talon du taquet(251)pour le verrouiller avec le ressort(258. fig:24a);sur le crochet(248)vient se fixer l'axe(260.fig:24a)du capteur(261. fig:24a).

Fonctionnement du coupleur(121.fig:2,3,5, 9,20).

Sur l'embout de l'arbre(12)primaire est usiné un épaulement avec deux rangées de quatre gorges décalées de 45° pour avoir une meilleure efficacité afin de recevoir dans chacune d'elle un piston(139.fig:3,19,20)de poussée sur les galets(141.fig:3,19);en bas de l'arbre(12)vient se loger le piston(137.fig;3, 19)de pilotage du dit"coupleur",sur ce dit"piston"(137),un gicleur(139.fig: 3,20)vient se poser pour alimenter la chambre(289.fig:3)de poussée des pistons(138)dès que le régime moteur;ces dits"pistons"poussent les galets(141 dans les creux des cames(142.fig:3,19)et plus la pression est importante, plus la montée est difficile donc entraîne l'arbre jusqu'à ne plus glisser pour venir verrouiller le piston(137)dans les cannelures,par l'intermédiaire de la poussée éxistante dans la chambre(289),dès que la pression redescend la pression ne passe plus par le gicleur(139)taré,donc repousse le piston (137)pour libérer les pistons(138)de poussée des galets(141);l'alimentation de ces dits"pistons"(138)se fait par l'intermédiaire d'un distributeur(264. fig:6,17,18)qui entre en service seulement en première vitesse ou en marche arrière en conduite à passage des vitesses à commande automatique ou semi-automatique avec démarrage automatique,dans tous les autres cas le distributeur(264)alimente le coupleur(121) par le conduit(290b.fig:3,6,18)pour pousser et verrouiller les deux parties(11et12)de l'arbre par l'intermédiaire du piston(137).

Fonctionnement du verrouillage du levier de vitesses(fig:21).

Dans le cas de passage des vitesses à commende manuelle,aucune alimentation n'est faite à l'électro-aimant(63.fig:1,16,21),quand le levier(62.fig:1,16,21) est déplacé,l'axe(64.fig:1,16,21)de verrouillage se déplace dans la rainure (299.fig:21c)du crochet(298.fig:21,21c,21d)ainsi que l'épaulement(300.fig:21a) du levier(62)pour entrainer l'embout(178.fig:4,16,20)de l'axe(1,4,13)de déplacement du plateau(72)afin de sélectionner une vitesse.

Dans le cas de passage des vitesses à commande automatique et semi-automatique,en position repos l'axe(64)de verrouillage se trouve placé sur la rainure (299)du crochet(298) dès que l'alimentation de l'électro-aimant(63)s'effectue, le crochet (298)entraine l'axe(64)de déverrouillage dans l'alésage(301.fig:21) prévu à cet effet sur le carter(4)de synchronisme,ce qui libère le levier(62) afin de sélectionner le sens de marche par l'intermédiaire d'un des capteurs (275/1et275/2.fig:1,21)sans entrainer l'embout(178) de l'axe(78) de déplacement du plateau(72),

FONCTIONNEMENT DE L ENSEMBLE DE TRANSMISSION.

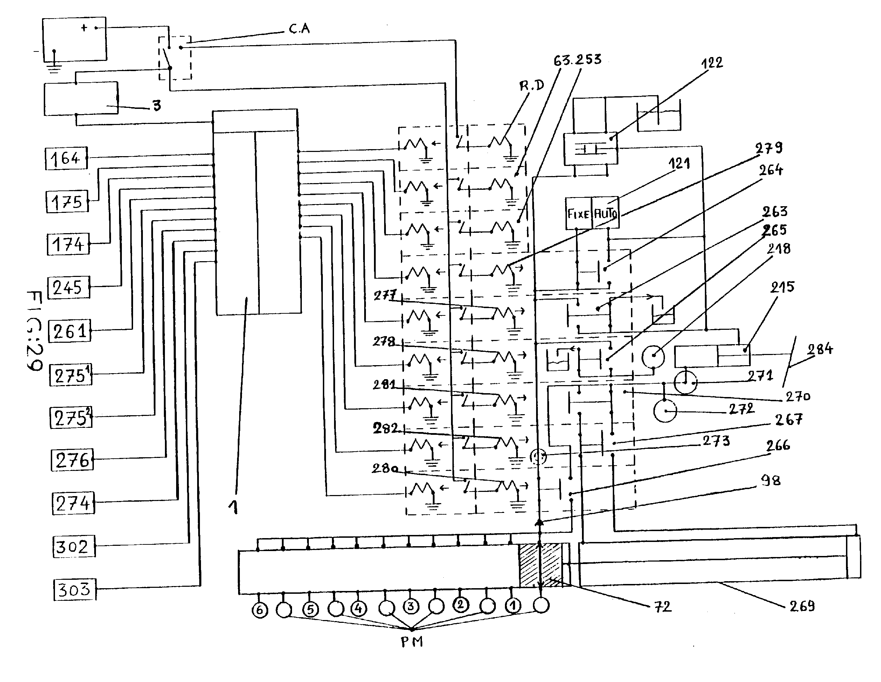

Démarrage du moteur.(fig29)

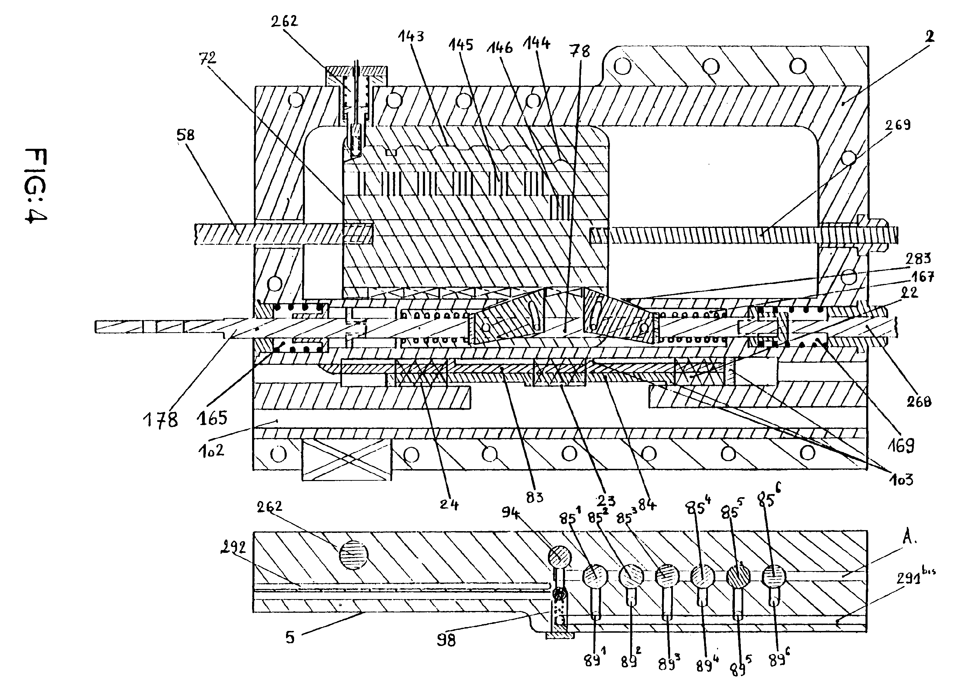

La mise en route du moteur se fait en position O (pont mort)au plateau(72) de commande,si le plateau(72)n'est pas en position O agir sur le levier de vitesses qui est vérrouillé systématiquement en position de commande manuelle après chaque arrêt du moteur à une vitesse nulle;par exemple si le véhicule est arrêté en position de 3ème après un service en position manuelle,pousser le levier de vitesses vers l'avant une première,puis une deuxième.puis une troisième fois.Cette manipulation s'effectue sans difficulté car les fourchettes de passage des vitesses se replacent seules en position neutre,dès que la pression d'huile est tombée,par l'intermédiaire des ressorts(180.fig:12)qui poussent sur les axes(83et84.fig.4,12,13)de remise au point mort.

Le plateau(72)contrôlé en position O par le noyau(174.fig:1,16)de placement qui en informe le boitier(1.fig:29),lui même commandant le relais de sécurité placé dans le circuit d'alimentation du lanceur du démarreur.

Dans le cas d'un problème électrique,seule la marche arrière peut être utilisée pour démarrer le véhicule en poussant car le passage se fait mécaniquement.

Fonctionnenent de la dite"transmission"avec le passage des vitesses à commande manuelle.

A la mise en route du moteur,la pompe à huile(122.fig:9,18,22,23)débite et vient alimenter les pistons(127et128.fig:6.12)de point mort par le clapet (94.fig 2.4)qui est en position ouvert par l'intermédiaire de la came(143. fig:4,5,10,14)qui pousse le doigt(97.fig:13)d'ouverture,afin d'obtenir la pression d'huile aux pistons(127et128),le clapet(1O4.fig:2,5,6)de vidange est fermé par la came(145.fig:4,5,10,10b,15);pour enclencher la première, appuyer sur la pédale d'embayage qui agit sur le piston(223.fig:5,18)d'embayage pour pousser la fourchette(284.fig:5)qui débraye pour libérer l'arbre primaire,dès cet instant prendre le levier de vitesses et le tirer vers soi pour agir sur le fourreau(62.fig:1,16,21)verrouillé par l'axe(64.fig:1, 16,21)sur l'embout(178) de l'axe(78.fig:1,4,13)de commande du plteau(72)de sélection,l'axe(78)vient déplacer les rochets(74et74b.fig:1,13)fixés dessus, le rochet(74)en se déplaçant,entraîne le plateau(72)par l'intermédiaire de la crémaillère(73.fig:1,13),le rochet(74b.fig:1)s'efface dans son dégagement par l'intermédiaire de la pointe(283.fig:4,1)usinée à cet effet,d'une distance définie par la course du fourreau(62).Pendant le déplacement du plateau(72)les fourchettes(115,116,117.fig:8,11,13,15)sont verrouillées par les doigts(118.fig:11,13)de verrouillage,dès que le plateau(72)arrive à environ 2mm de la position de 1ère, le doigt(118/1)de verrouillage s'efface dans le creux de la came(67/1.fig:9 10,10c)par l'intermédiaire de la pression d'huile, simultanément le clapet(94.fig:2,4)d'alimentation des pistons(127et128.fig: 6.12)de point mort se ferme car la ame(143.fig:4,5,10,14)s'est dégagée.Dans le même temps le clapet(104,fig:2,5,6)de vidange de ces dits"pistons"se libère,pour permettre leur vidange,car la came(145.fig:4,5,10,10b,15)s'est également dégagée;toujours dans le même temps,la came(144.fig:4,5,10,14)vient pousser le doigt(88.fig:15)du clapet(85/1.fig:,4)d'alimentation du piston (133/1,fig:2)de poussée de la fourchette(22.fig:4,5,8,11,14)de 1ère et la (146.fig:4,5,10,10a,15)ferme le clapet(89/1.fig:2,4)afin d'obtenir la pression nécessaire au déplacement de la fourchette(22);dans son déplacement le plateau(72)entraîne l'axe(58,fig:1,2,4,7,9,16)de commande du levier(53.fig: 1,7,9,16)de commande du synchronisme par l'intermédiaire du pignon(176.fig: 1,7,16)réducteur,le levier(53)pousse l'axe(120.fig:7,12,16,27,28)cannelé, entraîné par l'arbre(12)primaire,à travers l'ensemble des pignons mobiles pour placer l'épaulement(166.fig:7,27)fixe sur le pignon(44.fig:7,27,28) de 1ère et l'immobiliser par l'intermédiaire des billes(46.fig:7,28)qui bloquent les freins(45.fig:27,28)du pignon(44)de 1ère.La 1ère est passée,réembrayer et accélérer pour démarrer et lacher le levier de vitesses.

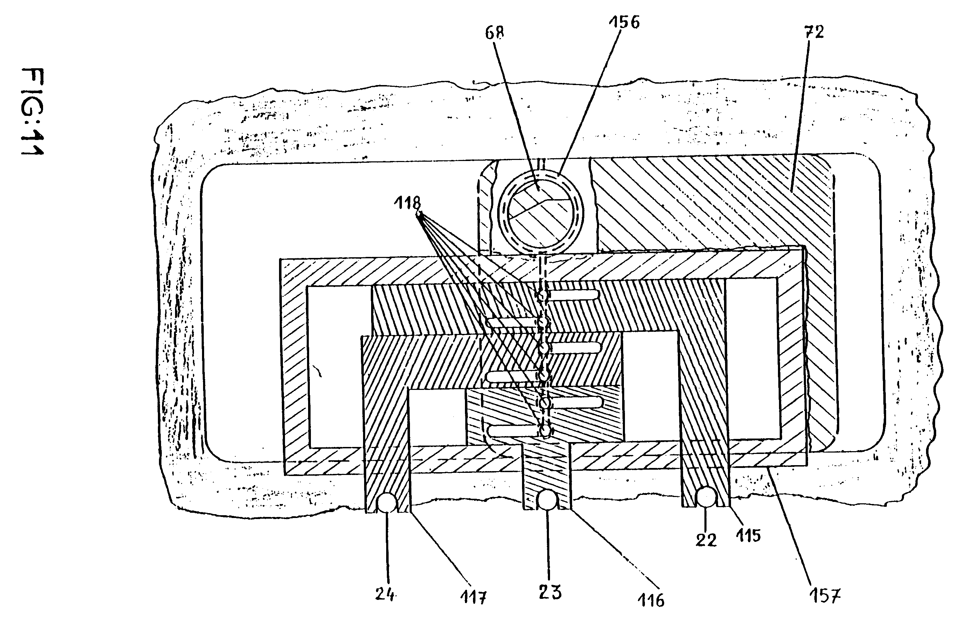

Pour passer en 2ème,tirer le levier de vitesses vers soi pour déplacer le fourreau(62.fig1,16,21)d'entrainement du plateau(72)qui,après avoir parcouru environ 2 mm ferme le clapet(85/1.fig:2,4)d'alimentation du piston(133/1.fig:2) de 1ère par l'intermédiaire de la came(144.fig:4,5,10,10b,15)qui s'est déplacée;la came(146.fig:4,5,10,10a,15)vient libérer le clapet(89.fig:2,4)de vidange du piston(133.fig:2),simultanément la came(143.fig:4,5,10,14)vient fermer le clapet(104.fig:2,5,6)de vidange des pistons(127et128.fig:6,12)pour les alimenter par le clapet(94.fig:2,4)qui s'ouvre par l'intermédiaire de la came(143. fig:4,5,10,14),donc remet le pignon de 1ère en position de point mort par l'intermédiaire de l'axe(93.fig:4,12,13)en vidant le piston(133/1)par le clapet (89/1)et en remplissant le piston(133/3.fig:2)opposé par le clapet(109/3.fig: 5,6,11,17)d'aspiration d'huile puisée dans la réserve(102.fig:4,13).Aussitôt la came(67/1.fig:10)s'éfface afin de verrouiller la fourchette(115.fig:8,11,13, 15)de verrouillage qui est revenue dans l'opération de remise au point mort. Pendant le déplacement du plateau(72),le levier(53.fig:1,7,9,16)de commande du synchronisme se déplace pour aller freiner le pignon(43.fig:7)synchronisateur de 2ème.Dès que le plateau arrive à environ 4 mm de la position de 2 ème,la came(67/2.fig:10)déverrouille le doigt(118/2.fig:11)de la fourchette(116.fig: 8,11,13,15)de verrouillage;en se déplaçant environ 2 mm de plus,le clapet(94. 2,4)de remplissage des pistons(127et128.fig:6,12)de point mort se ferme et la came(145.fig:4,5,10,10b,15)ouvre le clapet(104.fig:2,5,6)de ces dits"pistons", simultanément la came(144.fig:4,5,10,14)ouvre le clapet(85/2.fig:2,4)d'alimentation du piston(135/2.fig:2)de poussée de la fourchette(23.fig 4,5,11,8,14) de 2ème et la came(145.fig:4,5,10,10b,15)vient fermer le clapet(89/2.fig:2) pour obtenir la pression nécessaire dans le piston(135/2.fig:2)pour enclencher la 2ème.

Pour les vitesses suivantes,le cycle est le même,c'est à dire tirer le levier pour déplacer le plateau(72)qui change la came(144.fig:4,5,10,14)d'ouverture et la came(146.fig:4,5,10,10a,15)de fermeture,de place pour alimenter le piston correspondant à l'emplacement donné au plateau(72).

Pour descendre une vitesse,pousser le levier de vitesses pour ramener le plateau(72)sur le clapet(85.fig:6)d'alimentation de la vitesse inférieure,et ainsi de suite.

POur passer la marche arrière,pousser le levier de vitesses vers l'avant en déverrouillant le déplacement du plateau(72)avec le système de verrouillage (262.fig:1,4).

Pour passer au point mort après la marche arrière,lever le verrouillage(262) et tirer le levier vers soi.

S'il y a lieu de descendre deux ou plusieurs,répeter le mouvement du levier deux ou plusieurs fois sans réembrayer.

Pour une conduite avec double débrayage,dans un premier temps arrêter le levier au premier point dur obtenu par la mise en service du deuxième ressort (79.fig:1)de rappel,réembrayar puis accélérer,redébrayer pour finir la course du levier de vitesses,pour enclencher la vitesse sélectionnée.

Fonctionnement de la dite"transmission"à passage à commande automatique avec coupleur(121.fig:2,3,5,17).

Dès que le moteur est démarré,la pompe à huile(122.fig:9,18,22,23)est entrainée et vient:alimenter le distributeur(264,fig:6,17,18)qui verrouille l'entrainement de l'arbre(11)sur l'arbre(12)de sortie d'embrayage avec le piston (137.fig:3,19)en position fixe:alimenter 'ensemble des clapets(85.fig:6) d'alimentation des pistons de poussée des fourchettes qui sont en position fermée,car la came(144.fig:4,5,10,14)est dégagée,et le clapet(94.fig:2,4)d'alimentation des pistons(127et128.fig:6,12)de point mort,donc l'ensemble des pignons est maintenu au point mort.

– Sélectionner la position automatique sur le sélecteur(3.fig:29)de mode de marche,à ce moment le boitier(1.fig:6,29)commende instantanément:

– l'électro-aimant(279.fig:6,29)du coupleur(121.fig:2,3,5,17,29)qui déverrouille l'arbre(12)de la sortie d'embrayage(11)en inversant la pression d' huile sur le piston(137.fig:3,19)qui libère le fonctionnement des galets (141.fig:3,19).

– l'électro-aimant(278.fig:6,29)du distributeur(265.fig:6,17,18,19)qui verrouille le piston(223.fig:5,18)de commande d'embrayage par pied par l'intermediaire du piston(218.fig:5,18).

– l'électro-aimant(63.fig:1,16,21)de déverrouillage du fourreau(62.fig:1,16, 21)de levier de vitesses.

Pour démarrer,tirer le levier de vitesses vers soi pour donner une impulsion au capteur(275/1.fig:1,21,29)de marche avant qui informe le boitier(1)qui:

a)coupe l'accélération en appelant l'électro-aimant(223.fig:5,18)qui pousse la came(254.fig:24a)afin de basculer le taquet(251.fig:24a,24b)pour libérer les deux parties(248et250.fig:24a)de l'attelage(246.fig:24)du câble accélerateur

b)commande l'électro-aimant(277.fig:6,9,29)du distributeur(263.fig:6,29)d'alimentation du piston(215.fig:5)d'embrayage,l'alimentation s'effectuant par le conduit(288.fig:6,17),ce dit"piston"(215)vient tirer l'axe(217.fig:5)assemblé sur l'axe(225.fig:5)de commande de la fourchette(284.fig:5)pour débrayer lorsque le débrayage est terminé le débit d'huile dont la pression est controlée par le clapet(271.fig:6,18,29)réglable va alimenter le distributeur(266. fig:6,18,29)de mise au point mort par le conduit(289b.fig:6)et les distributeurs(267et270.fig:6,17,18,29),cette pression d'alimentation est controlée par le clapet(272,fig:6,18,29)qui laisse l'éxcédant de débit repasser dans le carter(6)de différentiel par le conduit (290.fig:6).

c)commande la mise au point mort par l'intermédiaire de l'électro-aimant (280.fig:6,29)du distributeur(266.fig:6,18,29)qui coupe l'alimentation générale des clapets(85.fig:6)et du clapet(94.fig:2,4)de mise au point mort qui sert en commande manuelle et position O dans tous les cas,pour alimenter les pistons(127et128.fig:6,12)de commande des axes(83et84.fig:4,12,13)de mise au point mort des fourchettes de passage des vitesses par le conduit(291b.fig: 2,4,11,18)dont le clapet(98.fig:2,4,5,6)empêche le retour d'huile vers l'alimentation générale;sur le conduit(291b),une déviation(292.fig:2,4,5,6)vient alimenter le piston de vidange(104.fig:2,5,6)pour le maintenir fermé par l' intermédiaire du piston(106.fi:13)qui pousse la bille(105.fig:13),pour fermer le conduit(293.fig:13)de vidange et du contre-piston(108.fig:13)plaqué contre la paroi du plateau(72).Cet ensemble permet de conserver la pression ou de l' obtenir sans attendre le déplacement du plateau(72)car la mise au point mort s'effectue dès que le débrayage est terminé;dès que les axes(83et84.fig:4,12, 13)sont controlés en position de point mort par le contact(245.fig:1,12), celui-ci informe le boitier(1)qui:

d)commande l'électro-aimant(282.fig:6,29)du distributeur(267.fig:6,17,18,29) d'alimentation du vérin(268. fig:1,4)de poussée de l'axe(78.fig:1,4,13)et du vérin(269.fig:1,4,5,17,29)de déplacement du plateau(72)est arrivé en position de 1ère,le noyau(174.fig:1,16)de placement informe le boitier(1)de sa présence et:

e)coupe l'alimentation de l'électro-aimant(282.fig:6,29)du distributeur (267.fig:6,17,18,29)qui revient en position repos par l'intermédiaire du ressort(180.fig:12),donc le plateau(72)est immobilsé en position 1ère,le vérin(268.fig:1,4)revient à sa position initiale,en aspirant de l'huile par le clapet(109/8,fig:1) par l'intermédiaire des ressorts(79et80.fig:1)qui ramènent l'axe(78.fig:1,4,13);en se déplaçant,le plateau-(72)entraine le levier (53.fig:53.fig:1,7,16)de commande du synchronisme qui vient bloquer les patins(45.fig:27,28)sur le pignon(44.fig:7,27,28)de 1ère,par l'intermédiaire des billes(46.fig:7,28)sur l'épaulement(166.fig:7,27)de l'axe(120.fig:7,12,16,27.28)cannelé,entrainé par l'arbre(12)primaire,sur lequel se trouve le capteur(164.fig:7)qui informe le boitier(1)de sa vitesse;le capteur(175.fig: 8,16)placé sur l'arbre(13)secondaire informe lui aussi de sa vitesse et dès que les vitesses correspondent au rapport c'est à dire nulle dans ce cas,le boitier(1)ordonne de:

f)couper l'alimentation de l'électro-aimant(280.fig:6,29)du distributeur (266.fig-6,17,18,29)de point mort,qui revient en position repos par l'intermédiaire du ressort(148.fig:5)pour alimenter le piston(133/1.fig:2)par le conduit(294.fig:2),par l'intermédiaire de la came(144.fig:4,5,10,14)qui ouvre le clapet(85/1.fig:2,4)d'alimentation et de la came(146.fig:4,5,10,10b,15), qui ferme le clapet(89/1.fig:2,4)de vidange du piston(133/1.fig:2),qui pousse le piston(133/fig:5,6)de déplacement de la fourchette(22.fig:4,5,8,11,14)de 1ère;le piston(133),en se déplaçant,vide le piston(133/3.fig:2)par le clapet (89/3.fig:2,4)et la fourchette(22)pousse l'axe(83.fig:4,12,13)de point mort, qui vide le piston(128.fig:6,12)par le clapet(104.fig:2,5,6)de vidange des pistons(127et128),la pression est maintenue au minimum par le ressort(107. fig:13)qui plaque la bille(105.fig:13)afin d'empêcher la vidange du circuit, la fourchette(22)déplace le pignon(14.fig:3)mobile qui coulisse sur l'arbre (13)secondaire pour s'enclencher sur le pignon(14b.fig:7)fixe de l'arbre(12) primaire.Dès que la fourchette(22)déplace l'axe(83.fig:4,12,13),le boitier(1) est informé du passage de la 1ère,donc il ordonne de:

g)couper l'alimentation de l'électro-aimant(277.fig:6,9,29)du distributeur (263.fig:6,29)de l'embayage qui revient en position repos par l'intermédiaire du ressort(148.fig:5),le piston(215.fig:5)se vide par le clapet(295.fig:6)de vidange qui maintient une pression minimum.Dès que le capteur(274.fig:1,5,29) de position repos de la fourchette(284.fig:5,29)au boitier(1),celui-ci ordonne de:

h)couper l'alimentation de l'électro-aimant(253.fig:24a,29)de l'attelage (246.fig:24)de l'accélérateur qui vient se verrouiller en position d'utilisation.

Le véhicule n'est pas entrainé car la pression d'huile alimentant le coupleur (121.fig:2,3,5,17,29)en position automatique est trop faible,pour faire avancer le véhicule il faut accélérer,le débit d'huile ainsi que la pression augmentent pour pousser les pistons(139.fig:3,19,20)sur les galets(141.fig:3,19) qui ont de plus en plus de difficulté à passer les cames(142.fig:3,19)de l'arbre(11)de sortie d'embrayage;le glissement s'élimine progressivement et le piston(137.fig:3,19)vient verrouiller l'arbre en position fixe,(voir le fonctionnement du coupleur(121)dans le paragraphe corrsspondant.Dès que le régime défini par la course de l'accélérateur est atteint,l'ordre de passer en 2ème vitesse est ordonné par l'intermédiaire du boitier(1)qui tient compte de la cour se de l'accélérateur,du régime moteur,de la vitesse,de la dépression du moteur de la température moteur,de la pression de frein;toutes ces données sont respectées à tout instant du fonctionnement de la dite"transmission"en commande automatique,ces données varient en fonction du véhicule,du moteur et du couple employés.Le boitier(1)tient compte de la vitesse dans le cas où il y aurait une défaillance momentanée du moteur,de façon à retomber sur le pignon de vitesse roulante,si le moteur repart.

passage de la 2ème vitesse.

Le boitier(1):

a)coupe l'accélération en appelant l'électro-aimant(253.fig:24a,29)qui déverrouille l'ensemble de l'attelage(246.fig: 4)du câble accélérateur.

b)commande l'électro-aimant(277.fig;6,9,29)du distributeur(263.fig:6,29)d'alimentation du piston(215. fig:5)d'embrayage.

c)coupe l'alimentation de l'electro-aimant(279.fig:6,29)du distributeur(264. fig:6,17,18,29)de l'alimentation du piston(137.fig:3,19)du coupleur(121)qui se fait par le conduit(290b.fig:3,6,18)pour le verrouiller en position fixe sur l'arbre(12).

d)commande simultanément la mise au point mort par l'intermédiaire de l'électro-aimant(280.fig:6,29)du distributeur(266.fig:6,18,29)qui coupe l'alimentation générale des clapets(85.fig:6)et du clapet(94.fig:2,4) de point mort et va alimenter les pistons(127et128.fig:6,12)de commande des axes(83et84.fig: 4,12,13)de poussée des fourchettes de passage des vitesses.Dès que les axes (83et84)sont en position point mort,le contact(245.fig:1,12)informe le boitier(1)qui:

e)commande l'électro-aimant(282.fig:6,29)du distributeur(267.fig:6,17,18,29) d'alimentation du vérin(268. fig:1,4)de poussée de l'axe(78.fig:1,4,13)et du vérin(269.fig:1,4,5,9,17,29)de déplacement du plateau (72);dès que le plateau (72)est arrivé en 2ème le noyau(174.fig:1,16)déplacement informe le boitier (1)de sa présence et:

f)coupe l'alimentation de l'électro-aimant(282.fig:6,29)du distributeur(267) qui arrête le plateau(72)sur la position de 2ème le vérin(268.fig:1,4)revient à sa position initiale,en se déplaçant le plateau(72)entraîne le levier de commande(53.fig:1,7,9,16)du synchronisme qui libère le pignon(44.fig:7,27,28) synchronisateur de 1ère et vient bloquer le pignon(43.fig:7)synchronisateur de 2ème par l'intermédiaire des billes(47.fig:7)sur l'épaulement(166.fig:7,27) de l'axe(120.fig:7,12,16,27,28),le capteur(164.fig:7)placé sur l'arbre(12) primaire informe de sa vitesse de rotation et le capteur(175.fig:8,16)placé sur l'arbre (12)secondaire informe lui aussi de sa vitesse de rotation le boitier(1)qui compare les vitesses de rotation de synchronisme de 2ème. Dès qu'elles sont correctes,il ordonne de:

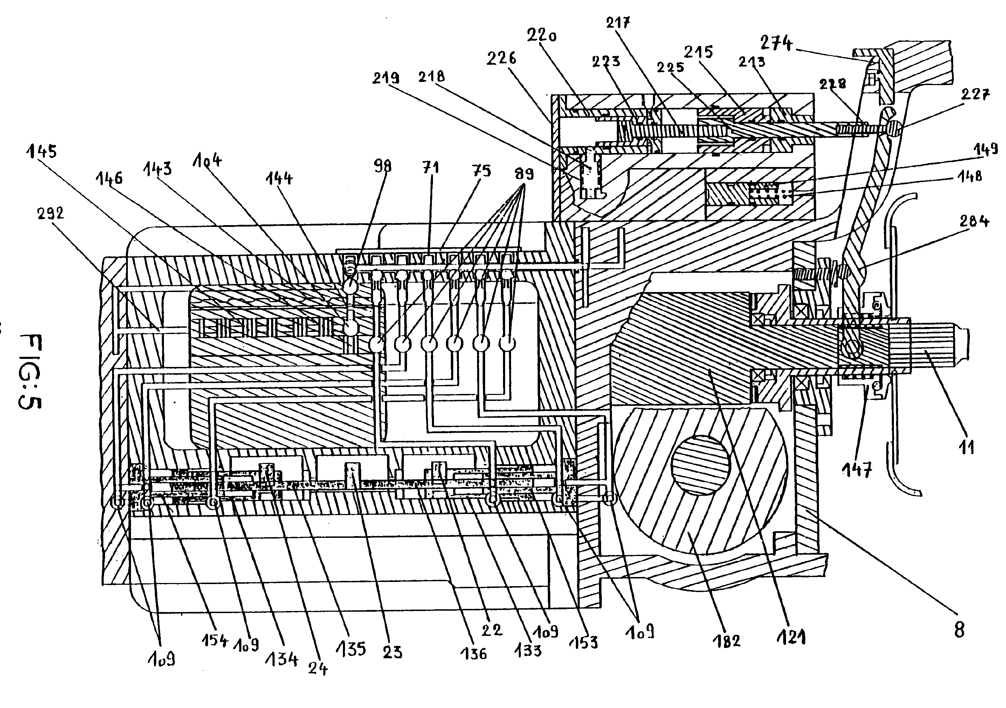

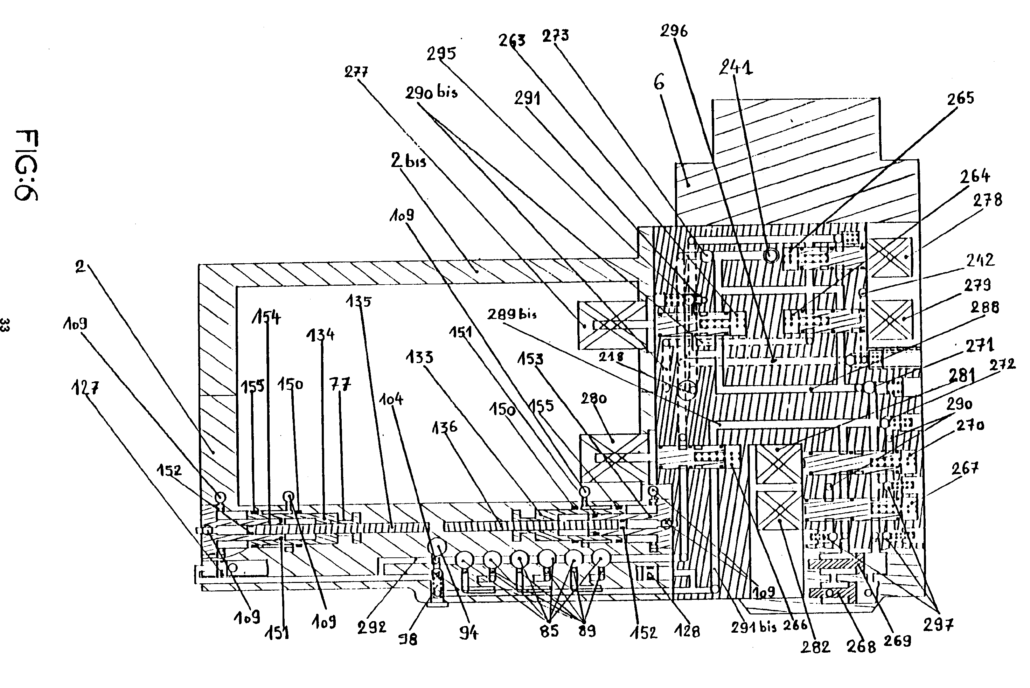

g)couper l'alimentation de l'électro-aimant(280.fig:6,29)du distributeur(266 fig:6,18,29)de point mort qui revient en position repos pour alimenter le piston(135/2.fig:2)par l'intermédiaire de la came(144.fig:4, 5,10,14)qui ouvre le clapet(85/2.fig:2)d'alimentation et de la came(146.fig:4,5,10,10b,15)qui ferme le clapet(89/2.fig:2)de vidange du piston(135/2)qui pousse l'axe(135.fig: 5,6)de déplacement de la fourchette(23.fig:4,5,11,8,13)de 2ème,l'axe(136.fig 5,6)vide le piston(136/5.fig:2)par le clapet(89/5.fig:2)et la fourchette(23) pousse l'axe(83.fig:4,12,13),qui vide le piston(128.fig:6,12)par le clapet (104.fig:2,5,6)de vidange des pistons(127et128);la fourchette(23)déplace le pignon(15.fig:3)mobile de 2ème qui coulisse sur l'arbre(13)secondaire pour s'enclencher sur le pignon fixe(15b.fig:7)de l'arbre(12).Dès que la fourchette (23)déplace l'axe(83)le boitier(1)est informé du passage de la 2ème donc:

h)coupe l'alimentation de l'électro-aimant(277.fig:6,9,29)du distributeur (263.fig:6,29)de l'embrayage qui revient en position repos,le piston(215. fig:5)se vide par le clapet(295.fig:6)de vidange,dès que le capteur(274.fig: 1,5,29)de position de la fourchette(284.fig:5,29)informe le boitier(1)qui:

i)coupe l'alimentation de l'électro-aimant(253.fig:24a,29)de l'attelage(246) de l'accélerateur qui se verrouille et le moteur réaccélère.

Le boitier(1)contrôle le fonctionnement et dès que le régime correspond au passage de la 3ème celui-ci:

a)coupe l'accélération.

b)commande le distributeur(263.fig:6,29)d'alimentation du piston(215.fig:5) d'embrayage.

c)commande la mise au point mort par l'intermédiaire de l'électro-aimant(280. fig:6,29)du distributeur(266.fig:6,18,29)qui coupe l'alimentation générale des clapets(85.fig:6)et du clapet(94.fig:2,4)pour alimenter les pistons(127 et128,fig:6,12)de commande des axes(83et84.fig:4,12,13)de mise au point mort donc pousse l'axe(83)qui pousse la fourchette(23.fig:4,5,8,11,13)qui vide le piston(136/5.fig:2)par le clapet(89/5.fig:2,4);dès que les axes(83et84.fig: 4,12,13)sont en position de point mort,le contact(245,fig:1,12)informe le boitier(1)qui:

d)commande l'électro-aimant(282.fig:6,29)du distributeur(267.fig:6,17,18,29) d'alimentation du vérin(268. fig:1,4)de poussée de l'axe(78.fig:1,4,13)et du vérin(269.de déplacement du plateau(72);dès que le plateau(72)est arrive en position de 3ème,le noyau(174.fig:1,16)de placement informe le boitier de sa présence,qui:

e)coupe l'alimentation de l'électro-aimant(282)du distributeur(267)qui arrête te le plateau(72)sur la position de 3ème,le vérin(268)revient à sa position initiale;en se déplaçant le plateau(72)entraine le levier(53. fig;1,7,9,16)de commande du synchronisme qui libère le pignon(43.fig.7)synchronisateur de 2ème et vient bloquer le pignon(42.fig:7)synchronisateur de 3ème par l'intermediaire des billes(47.fig:7)sur l'épaulement(166.fig:7,27)de l'axe(120.fig:7, 12,16,27,28);le capteur(175.fig:8,16)placé sur l'arbre(13)secondaire ainsi que le capteur(164.fig:7)placé sur l'arbre(12)primaire informent de leur vitesse respective le boitier(1)qui les compare avant de:

f)couper l'alimentation de l'électro-aimant(280.fig:6,29)du distributeur(266. fig:6,18,29)de point mort qui revient en position repos pour alimenter le piston(133/ .fig:2)par l'intermédiaire de la came(144; fig:4,5, 10,14)qui ouvre le clapet(85/3)d'alimentation et de la came(146.fig:4,5,10,10a,15)qui ferme le clapet(89/3.fig:2)de vidange du piston(133/3.fig:2)qui pousse le piston(133. fig:5,6)de déplacement de la fourchette(22.fig:4,5,8,11,14)de 3ème;le piston (133)vide le piston(133/1.fig:2)par le clapet(89/1.fig:2)de vidange,la fourchette(22)déplace le pignon(16.fig:3)mobile de 3ème qui coulisse sur l'arbre primaire.Dés que la fourchette(22)déplace l'axe(84.fig:4,12,13),le piston(127 fig:6,12)se vide par le clapet(104. fig:2,5.6),le boitier(1)est informé du passage de la 3ème par l'intermédiaire du contact(245.fig:1,12)et donc ordonne de

g)couper l'alimentation de l'électro-aimant(277.fig 6,9,29)du distributeur (263.fig:6,29)du piston(215.fig:5)d'embrayage qui se vide par le clapet(295. fig:6)en gardant une légère pression de contact sur la fourchette(284.fig: 5,29).Dès que le capteur(274.fig:1,5,29)de position de la fourchette informe le boitier(1)de sa Position,celui-ci:

h)coupe l'alimentation de l'électro-aimant(253.fig:24a,29)de l'attelage de l'accélérateur qui redonne le régime au moteur.

Le véhicule roule en 3ème,dès que le régime est atteint pour le passage en 4ème,le boitier(1):

a)coupe l'accélération par l'intermédiaire de l'électro-aimant(253.fig: 24a,29)qui déverrouille l'attelage(246.fig:24).

b)commande le distributeur(253.fig:5,29)de l'alimentation du piston(215. fig:5)d'embrayage.

c)commande la mise au point mort par l'intermédiaire de l'électro-aimant (280.fig:6,29)du distributeur(266.fig:6,18,29)qui coupe l'alimentation générale des clapets(85.fig:6)et du clapet(94.fig:2,4)de point mort pour alimenter les pistons(127et128.fig:6,12)par le conduit(291b.fig:2,4,6,18)de commande des axes(83et84.fig:4,12,13)de poussée des fourchettes en position point mort,donc pousse la fourchette(22.fig:4,5,11,8,14)qui déplace le piston(133.fig:5.6)en vidant le piston(133/3.fig:2)par le clapet(89/3.fig:2) et en remplissant le piston(133/1.fig:2)par le clapet(109/1.fig:5,6).Dès que les axes(83et84)sont en position de point mort,le contact(245.fig:1,12) informe le boitier(1)qui:

d)commande l'électro-aimant(282.fig:6,29)du distributeur(267.fig:6,17,18,29)d'alimentation du vérin(268. fig:1,4)de poussée de l'axe(78.fig:1,4,13)et du vérin(269.fig:1,4,5,9,17,29)de déplacement du plateau(72).Dès que le plateau(72)est arrivé en position de 4ème le noyau(174.fig:1,16)de placement informe de boitier(1)de sa présence,qui:

e)coupe l'alimentation de l'électro-aimant(282.fig:6,29)du distributeur (267.fig:6,17,18,29)qui arrête le plateau(72)sur la position de 4ème,le vérin(268.fig:1,4)revient à sa position initiale en aspirant l'huile nécéssaire par le clapet(109/8.fig:1).En se déplaçant,le plateau(72)entraine le levier (53.fig:1,7,9,16)de commande du synchronisme qui libère le pignon(42.fig:7) synchronisateur de 3ème et vient bloquer le pignon(41.fig:7)synchronisateur de 4ème par l'intermédiaire des billes(47)sur l'épaulement(166.fig:7,27)de l'axe(120.fig:7,12,16,27,28)cannelé,le capteur(164.fig:7)placé sur l'arbre (12)primaire informe sa vitesse de rotation et le capteur(175)placé sur l' arbre secondaire(13)informe lui aussi de sa vitesse le boitier(1)qui compare la vitesse de synchronisme et dès qu'elles sont correctes,celui-ci:

f)coupe l'alimentation de l'électro-aimant(280.fig:6,29)du distributeur (266.fig:6,18,29)de point mort qui revient en position de repos pour alimenter le piston(134/4.fig:2)par l'intermédiaire de la came(144.fig:4,5, 10,14)qui ouvre le clapet(85/4.fig:2)d'alimentation et de la came(146.fig:4,5,10 10a,15)qui ferme le clapet(89/4.fig:2)de vidange du piston(134/4.fig:2)qui pousse le piston(134.fig:5,6)de déplacement de la fourchette(24.fig:4,5,8,11,14)de 4ème,en vidant le piston(134/6.fig:2)par le clapet(89/6.fig:2);la fourchette (24)déplace le pignon(17.fig:3) mobile de 4ème pour l'enclencher sur le pignon (17b.fig:7)fixe de l'arbre(12)primaire.Dès que la fourchette(24)se déplace, elle entraine l'axe(83.fig:4,12,13)de point mort qui vide le piston(127.fig:6, 12)par le clapet(104.fig:2,5,6)et le contact(245.fig:1,12)informe le boitier (1)du passace de la vitesse,qui:

g)coupe l'alimentation de l'électro-aimant(277.fig:6,9,29)du distributeur (263.fig:6,29)du piston(215.fig:5) d'embrayage qui revient en position repos en se vidant par le clapet(295.fig:6),dès que le capteur (274.fig:1,5,29)signale la position de la fourchette(284.fig:5,29)au repos,le boitier(1):

h)coupe l'alimentation de l'électro-aimant(253.fig:24a,29)de l'attelage(246. fig:24)de l'accélérateur et le régime moteur repart.

Le véhicule roule en 4ème,et dès que le régime est atteint pour passer en 5ème,le boitier(1):

a)coupe l'accélération par l'intermédiaire de l'électro-aimant(253.fig:24a,29)

b)commande le distributeur(263.fig:6,29)d'alimentation de l'embrayage.

c)commande la mise au point mort par l'intermédiaire de l'électro-aimant(280. fig:6,29)du distributeur(266.fig:6,18,29)qui coupe l'alimentation générale des clapets(85.fig:6)et du clapet(94.fig:2,4)de point mort des fourchettes;donc la fourchette(24.fig:4,5,8,11,14)de 4ème qui déplace le piston(134.fig:5,6)en vidant le piston(134/6.fig:2)par le clapet(89/6.fig:2)et en remplissant le piston(134/4.fig:2)par le clapet(109/4.fig:5).Dés que les axes(83et84.fig:4,12,13) sont en position de point mort,le contact(245. fig:1,12)de position informe le boitier(1),qui:

d)commande l'électro-aimant(282.fig:6,29)du distributeur(267.fig:6,17,18,29) d'alimentation du vérin(268. fig:1.4)de poussee de l'axe(78.fig:1,4)et du vérin (269.fig:1,4,5,9,17,29)de déplacement du plateau (72).Dès que celui-ci est arrivé en position de 5ème le noyau(174.fig:1,16)de placement informe le boitier (1)de sa présence qui:

e)coupe l'alimentation de l'électro-aimant(282)du distributeur(267)qui arrête le plateau(72)sur sa position de 5ème,le verin(268.fig:1,4)revient à sa position initiale en se remplissant par le clapet(109/8.fig:1)et en se vidant par le clapet(297.fig:6,18).En se déplaçant le plateau(72)entraine le levier(53. fig 1,7,9,16)de commande du synchronisme qui libère le pignon(41.fig:7)synchronisateur de 4ème et vient bloquer le pignon(40.fig:7)synchronisateur de 5ème, par l'intermédiaire des billes(47.fig:7)et des patins(45.fig:27,29) sur l'épaulement(166.fig:7,27)de l'axe(120.fig:7,12,16,27,28).Le capteur(164.fig:7)placé sur l'arbre(12) primaire informe de sa vitesse de rotation et le capteur(175. fig:8,16)placé sur l'arbre(13)secondaire informe lui aussi de sa vitesse de rotation le boitier(1),qui compare les vitesses de synchronisme et dès qu' elles sont correctes :

f)coupe l'alimentation de l'électro-aimant(280.fig:6,29)du distributeur(266. fig:6,18,29)de point mort qui revient en position repos pour alimenter le piston(136/5.fig:2)par l'intermédiaire de la came(144. fig:4,5,10,14)qui ouvre le clapet(85/5.fig:2)d'alimentation et de la came(146.fig:4,5,10,10a,15)qui ferme le clapet(89/5.fig:2)de vidange du piston(136/5.fig:2)qui pousse l'axe(84.fig.4,12,13)en vidant le piston(127.fig:6,12)par le clapet(104.fig 2.5,6)de vidange.La fourchette(23.fig:4,5,8,11,13)déplace le pignon (18.fig:3)mobile de ème pour l'enclencher sur le pignon(18b.fig:7)fixe de l'arbre(12)primaire. Dès que la fourchette(23)se déplace,celle-ci entraine l'axe(84)de point mort qui informe le passage de la 5ème par l'intermédiaire du contact(245.fig:1,12) le boitier(1),qui:

g)coupe l'alimentation de l'électro- aimant(277.fig:6,9,29)du distributeur (263.fig:6,29)du piston(215.fig:5) d'embrayage qui se vide par le clapet(295. fig:6).Dès que le capteur(274.fig:1,5,29)informe de la présence de la fourchette(284.fig:5,29)dans sa position repos,le boitier(1),celui-ci:

h)coupe l'alimentation de l'électro- aimant(253.fig:24a,29)de l'attelage(246. fig:24)de l'accélérateur et le régime moteur se remet.

Le véhicule roule en 5ème et dès que régime est atteint le boitier(1):

a)coupe l'accélération par l'intermédiaire de l'électro-aimant(253.

b)commande l'électro-aimant(277.fig:6,9,29)du distributeur(263.fig:6,29)d'alimentation du piston(215. fig:5)d'embrayage.

c)commande la mise au point mort par l'intermédiaire de l'électro-aimant(280.fig:6,29)du distributeur(266. fig:6,18,29)qui coupe l'alimentation générale des clapets(85.fig:6)et du clapet(94.fig:2,4)de point mort pour alimenter les pistons(127et128.fig:6,12)de commande des axes(83et84.fig:4,12,13)de poussée des fourchettes,et qui déplace la fourchette(23.fig:4,5,8,11,13)de 5ème en poussant l'axe(84.fig:4,12,13).Dès que les axes(83et84)sont en position point mort,le contact(245.fig:12)informe le boitier(1)qui:

d)commande l'électro-aimant(282.fig:6,29)du distributeur(267.fig:6,17,18,29) d'alimentation du vérin (268.fig:1,4)de poussée de l'axe(78.fig:1,4,13)et du vérin(269.fig:1,4,5,9,17,29)de déplacement du plateau(72).Dès que le plateau est arrivé en position de 6ème le noyau(174.fig:1,16)de placement informe le boitier(1),qui:

e)coupe l'alimentation de l'électro-aimant(282)du distributeur(267)qui arrête le plateau(72)sur la position de 6ème,le vérin(269.fig:1,4)revient à sa position initialeen se vidant par le clapet(297.fig:6,19)et en se remplissant par le clapet(109/8.fig:1).En se déplaçant,le plateau(72)entraine le levier (53.fig:1,7,9,16)de commande du synchronisme qui libère le pignon synchronisateur(40.fig:7)de 5ème et vient bloquer le pignon synchronisateur(39.fig:7) de 6ème.Le capteur(164.fig:7)placé sur l'arbre(12)primaire informe de sa vitesse de rotation et le capteur(175.fig:8,16)placé sur l'arbre(13)secondaire informe lui aussi de sa vitesse,le boitier(1)qui compare les deux vitesses et dès qu'elles sont correctes, il:

f)coupe l'alimentation de l'électro-aimant(280.fig:6,29)du distributeur(266. fig:6,18,29)de point mort qui revient en position repos pour alimenter lemiston(134/6.fig:2)par l'intermédiaire de la came(144. fig:4,5,10,14)qui ouvre le clapet(85/6.fig:2)et de la came(146.fig:4,5,10,10a,15)qui ferme le clapet (89/6.fig:2)de vidange du piston(134.fig:2)qui pousse le piston(134)en vidant le piston(134/4.fig:2)par le clapet(89/4.fig:2).La fourchette(24.fig:4, 5,8,11,14)déplace le pignon(19.fig:3)mobile de 6ème,pour l'enclencher sur le pignon(19b.fig:7)fixe de l'arbre(12)primaire.Dès que la fourchette(24)se déplace,elle entraine l'axe(84.fig:4,12,13)de point mort qui vide le piston(127. fig:6,12 par le clapet(130.fig:2,5,6)et informe le boitier(1)du passage de la 6ème par le contact(245.fig:1,12),le boitier(1):

g)coupe l'alimentation de l'électro-aimant(277.fig:6,9,29)du distributeur (263.fig:6,29)du piston(215.fig:5) qui se vide par le clapet(295.fig:6).Dès que le capteur(274.fig:1,5,29)signale la position de la fourchette(284.fig: 5,29)au repos,au boitier(1),celui-ci:

h)coupe d'alimentation de l'électro-aimant(253.fig:24a,29)de l'attelage(246. fig:24)du câble accélérateur et le régime moteur repart.

Le véhicule roule en 5ème.

Rétrogradage d'une vitesse seule jusqu'en 2ème.

Ex:de 6ème en 5ème.

Cette opération s'effectue à partir des informations données au boitier(1),qui:

a)coupe l'accélération par l'intermédiaire de l'électro-aimant(253 .

b)commande l'électro-aimant(277.fig:6,9,29)du distributeur(263.fig:6,29)du piston(215.fig:5)d'embrayage.

c)commande la mise au point mort par l'intermédiaire de l'électro-aimant(280. fig:6,29)du distributeur(266.fig:5,18,26)qui coupe l'alimentation générale des clapets(85.fig:6)et du clapet(94.fig:2,4)de point mort pour alimenter les pistons(127et128.fig:6,12)de commande des axes(83et84.fig:4,12,13)de poussée des fourchettes;ainsi la fourchette(24.fig:4.5,8,11,14)de 6ème pousse le piston(134.fig:5,6)en vidant le piston(134/6.fig.2)par le clapet(89/6.fig:2)et en remplissant le piston(134/4.fig:2)par le clapet(109/4. fig:5,6).Dès que les axes(83et84.fig:4,12,13)sont en position de point mort,le poussoir(243.fig: 12)agit sur le contact(245.fig:1,12)qui informe le boitier(1),qui:

d)commande l'électro-aimant(281.fig:6,29)du distributeur( d'alimentaticn du vérin(258.fig:1,4)de poussée de l'axe(78.fig:1,4,13)qui déplace le rochet(74b. fig:1)et du vérin(269.fig:1,4,5,9,17,29)de déplacement du plateau(72).Dès que le plateau(72)est en position de 5ème,le noyau(174.fig:8,16)de placement informe le boitier(1),qui:

e)coupe l'alimentation de l'électro-aimant(281.fig;6,29)du distributeur(270. fig:5,17,18,29)qui revient à sa position repos;le vérin(258)de commande de l' axe(78)revient à sa position initiale en se remplissant par le clapet(109/7. fig:1)d'une part et en se vidant par le clapet(297.fig:6,18).En se déplaçant, le plateau-(72)déplace le levier(53.fig:1,7,9,16)de commande du synchronisme qui libère le pignon(39.fig:7)synchronisateur de 6ème et vient bloquer le pignon(40.fig:7)synchronisateur de 5ème sur l'épaulement(166. fig:7,27)de l'axe (120.fig:7.12,16,27,28)cannelé.Le capteur(164.fig:7)placé sur l'arbre(12) primaire informe de sa vitesse de rotation ainsi que le capteur(175.fig:8,16) placé sur l'arbre(13)secondaire,le boitier(1)qui compare les vitesses de synchronisme et dès qu'elles sont correctes,il:

f)coupe l'alimentation de l'électro-aimant(280.fig:6,29)du distributeur(266. fig:6,18,29)de point mort qui revient en position repos pour alimenter le piston(136/5.fig:2)par l'intermédiaire de la came (144.fig:4,5,10,14)qui ouvre le clapet(85/5.fig:2)d'alimentation et de la came(146.fig:4,5,10,10a,15)qui ferme le clapet(89/5.fig:2)de vidange au piston(136/5.fig:2)qui pousse la fourchette(23.fig:4,5,8,11,13)par l'intermédiaire de l'axe(136.fig:5,6).La fourchette(23)déplace le pignon(18.fig:3)de 5ème pour l'enclencher sur le pignon (18b.fig:7)fixe de l'arbre(12)primaire.Dès que la fourchette(23)se déplace, elle entraine l'axe(84.fig:4,12,13)de point mort qui vide le piston(127.fig: 6,12)par le clapet(104.fig:2,5,6)libéré de sa came(145.fig:4,5,10,10b,15)et informe le boitier(1)du passage de la 5ème par le contact(245.fig:1,12),qui:

g)coupe l'alimentation de l'électro-aimant(277.fig:6.9,29)du distributeur (263.fig:6,29)du piston d'embrayage qui se vide par le clapet(295.fig:6). Dès que le capteur(274.fig:1,5,29)de la position de la fourchette(284.fig:5, 29)informe le boitier(1),celui-ci:

h)coupe l'alimentation de l'électro-aimant(253.fig:24a,29)de l'attelage (246.fig:24)de l'accélérateur.

Le véhicule roule en 5ème.

Le rétrogradage des autres vitessss jusqu'en 2ème s'effectue de la même manière.

Rétrogradage de 2ème ou d'une autre vitesse,en 1ère,le boitier(1):

a)coupe l'accélération en appelant l'électro-aimant(253.fig:24a 29)qui déverrouille l'attelage(246.fig:24)de l'accélérateur.

b)commande l'électro-aimant(277.fig:6,9,29)du distributeur(263.fig:6,29)d' alimentation du piston(215.fig:5)d'embrayage.

c)commande la mise au point mort par l'intermédiaire de l'électro-aimant (280.fig:6,29)du distributeur(266.fig:6,18,29)qui coupe l'alimentation des clapets(85.fig:6)et du clapet(94.fig:2,4)pour alimenter les pistons(127et 128.fig:6,12)de commande des axes(83et84.fig:4,12,13)de poussée des fourchettes en position point mort,le contact(245.fig:1,12)informe le boitier(1) qui:

-contrôle la vitesse pour enclencher le coupleur(121.fig:2,3,5,17,19,20,29) en position automatique,dès que la vitesse devient inférieure à 10km:h,il:

d)alimente l'électro-aimant(279.fig:6,29)du distributeur(264.fig:6,17,18,29) qui déverrouille l'arbre(12)primaire de l'entrainement de sortie d'embrayage (11.fig:3 5,19,20)par l'intermédiaire de la pression d'huile qui diminue et qui est inversée au piston(137.fig:3,19).

e)commande simultanément l'électro-aimant(282.fig:6,29)du distributeur(267. fig:6,17,18,29)d'alimentation du vérin(268.fig:1,4)qui pousse l'axe(78.fig: 1,4,13),et du vérin(26..fig:1,4,5,9,17,29)de déplacement du plateau(72).Dès que plateau(72)est arrivé en position de 1ère,le noyau(174.fig:1,16)de placement informe le boitier(1),qui:

f)coupe l'alimentation de l'électro-aimant(282)du distributeur(267),qui revient en position repos.En se déplaçant,le plateau(72)entraine le levier(53. fig:1,7,9,16)de commande du synchronisme,qui libère le pignon de la vitesse enclenchée précédemment et vient bloquer le pignon(44.fig:7,27,28)synchronisateur de 1ère sur l'épaulement(166.fig:7,27)de l'axe(120.fig:7,12,16,27,28) cannelé.Le capteur(175.fig:8,16)placé sur l'arbre(13)secondaire et le capteur (164.fig:7)placé sur l'arbre(12)primaire informent de leur vitesse respective le boitier(1),qui les compare et dès qu'elles sont correctes,celui-ci:

g)coupe l'alimentation de l'électro-aimant(280.fig:6,29)du distributeur(266. fig:6,18,29)de point mort qui revient en position repos pour alimenter le piston(133/1.fig:2)de 1ère pour enclencher le pignon(14.fig:3) mobile sur le pignon(14b.fig:7)fixe de l'arbre primaire.Dès que la fourchette(22.fig:4,5,8, 11,14)se déplace,elle entraine l'axe(83.fig:4,12,13)qui libère le contact (245.fig:1,12),pour informer le passage de la 1ère au boitier(1),qui:

h)coupe l'alimentation de l'électro-aimant(277.fig.6,9,29)du distributeur (263.fig.6,29)de l'embrayage qui se vide par le clapet(295.fig.6).Dès que le capteur(274.fig:1?5,29)informe de la présence de la fourchette(284.fig:5,29) en position repos,le boitier(1),celui-ci:

i)coupe l'alimentation de l'électro-aimant(253.fig.24a,29)de l'attelage(246. fig:24)du câble accélérateur.

Donc le véhicule peut s'arrêter,il est en position automatique,ou repartir pour ensuite repasser en 2ème comme le fonctionnement l'indique dans un paragraphe précédent.

Rétrogradage d'une ou de plusieurs vitesses dans le cas d'un arrêt brutal. La vitesse de redémarrage est sélectionnée par le boitier(1)qui tient compte de la vitesse roulante et du régime;les vitesses intermédiaires sont éffaçées car le plateau(72)vient se placer directement sur la position sélectionnée et contrôlée par le noyau(174.fig:1,16)de placement.

L'opération de passage s'effectue à la manière d'un rétrogradage progressif; si la vitesse sélectionnée est la 1ère,le passage se fait à la manière décrite dans le paragraphe de passage en 1ère automatique;dans tous les cas le coupleur(121.fig:2,3,5,17,20,29)passe en position automatique vers 10km/h. Dans le cas d'un arrêt brutal où la pression de freinage est supérieure à environ 50 bars contrôlée et transmise au boitier(1)par le contact(276.fig: 29),positionné à la sortie émetteur de freinage,aucune opération n'est ordonnée au dessus de 20km/h afin d'éviter tout déséquilibre du frein moteur. Dans le cas d'un arrêt brutal,nécessitant le blocage des roues jusqu'à arrêt du moteur,celui-ci ne pourra redémarrer qu'après remise à O du plateau(72) par le levier de vitesses qui permet la remise en route,comme l'indique le paragraphe de démarrage.

Passage de la marche arrière avec passage au point mort auparavant. Le levier de vitesses,se replaçant toujours en position neutre,il faut le pousser vers l'avant pour donner une impulsion sur le capteur(275/1.fig:1,21,29) Qui ordonne la remise au point mort du plateau(72)par l'intermédiaire du boitier(1),qui:

a)coupe l'accélération en appelant l'électro-aimant(253.fig:24a,29)de l'attelage(246.fig:24)de l'accélérateur,

b)commande l'électro-aimant(277.fig:6,9,29)de distributeur(263,fig:6,29)d' alimentation du piston(215. fig:5)d'embrayage.

c)commande la mise au point mort par l'intermédiaire de l'électro-aimant 280.fig:6,29)du distributeur(266.fig:6,18,29),qui coupe l'alimentation générale des clapets(85.fig:6)et du clapet(94.fig:2,4),de point mort;le piston (128,fig:6,12)pousse la fourchette(22.fig:4,5,8,11,14),en entrainant le piston (133,fig:5,6)qui vide le piston(133/1.fig:2)par le clapet(89/1.fig:2).Dès que les axes(83et84.fig:4,12,13)sont en position point mort,le contact(245.fig:1, 12)informe le boitier(1),qui:

d)coupe l'électro-aimant(279.fig:6,29)de commande du distributeur(264.fig: 6,17,18,29)d'alimentation du coupleur(121.fig:2,3,5,17,19,20,29)qui passe en position fixe.

Et simultanément:

e)commande l'électro-aimant(281.fig:6,29)du distributeur(270.fig:6,17,18,29) d'alimentation du vérin(268,fig:1,4)qui pousse l'axe(78.fig:1,4,5,9,17,29)de déplacement du plateau(72).Dès que le plateau(72)est arrivé en position point mort,le noyau(174.fig:1,16)de placement informe le boitier(1)de sa présence, qui:

Si le levier de vitesses est maintenu poussé et verrouillé:

f)contrôle les vitesses de rotation des arbres primaire et secondaire par l'intermédiaire des capteurs(164.fig:7et175.fig:8;16)placés respectivement sur leur arbre.Dès que la vitesse est nulle le boitier-(1)ordonne de:

g)maintenir l'électro-aimant(281)du distributeur(270)d'alimentation des vérins(268et269)qui continuent le déplacement du plateau(72),qui bascule le levier(25.fig:12,13,14)de passage de marche arrière pour enclencher le pignon (20.fig:12)baladeur sur les pignons(14.fig:3et14b.FIG:7)de 1ère.Dès que le plateau(72)est à sa position,le noyau(174.fig:1,16)de placement informe le boitier(1)de sa présence,qui: simultanément,

h)commande l'électro-aimant(279.fig:6,29)du distributeur(264.fig:6,17,18,29)d'alimentation du coupleur(121).

i)coupe l'alimentation de l'électro-aimant(281)du distributeur(270)d'alimentation des vérins(268et269)de déplacement du plateau(72).

j)coupe l'alimentation de l'électro-aimant(277.fig:6,9,29)du distributeur (263.fig:6,29)d'alimentation du piston(215;fig:5)d'embrayage,dès que le capteur(274.fig:1,5,29)de position repos de la fourchette(284.fig:5, 29)informe le boitier(1),celui-ci:

k)coupe l'alimentation de l'électro-aimant(253.fig:24a,29)de l'attelage(246.fig:24)du câble accélérateur.

Pour reculer: appuyer sur l'accélérateur afin de fournir une pression suffisante au coupleur(121)qui entraine le véhicule.

Pour revenir au point mort;tirer le levier vers soi en levant le verrouillage (262.fig:1,4)du plateau(72)pour donner une impulsion au capteur(275.fig:1,21, 29)qui informe le boitier(1),qui ordonne la remise à O du plateau(72),donc le point mort.

Pour repartir en 1ère donner une 2ème impulsion sur le capteur(275/1).

Fonctionnement de la dite"transmission"avec passage des vitesses à commande automatique sans coupleur.

Sélectionner la position automatique sur le sélecteur(3.fig:29)qui alimente, à ce moment-là,le boitier(1),lequel commande instantanément:

a)l'électro-aimant du distributeur(265.fig:6,17,18,29)qui vérrouille le piston(220.fig:5)de commande de l'embrayage à pied.

b)l'électro-aimant(63.fig:1,16,21)de déverrouillage du levier de vitesses.

Pour démarrer: lever le pied de l'accélérateur et tirer le levier de vitesses vers soi pour donner une impulsion au capteur(275/1.fig:1,21,29)de marche avant afin d'informer le boitier(1),qui:

a)coupe l'accélération par sécurité;

b)commande l'électro-aimant(277.fig:6,9,29)du distributeur(263.fig:6,29) afin de débrayer.

c)commande l'électro-aimant(280.fig:6,29)du distributeur(266.fig6,18,29)de mise au point mort.

d)commande le déplacement du plateau(72)afin de sélectionner la 1ère.

Toute la phase de passage terminée,le boitier(1)ordonne la remise en service de l'accélérateur. pour faire avancer le véhicule,il faut appuyer sur l'accélérateur afin que le noyau(261.fig:24a,29)donne l'information au boitier(1) qui:

a)coupe l'alimentation du piston(215.fig:5)d'embrayage qui se vide progressivement à travers le gicleur(291.fig:6)de vidange,afin d'embrayer pour démarrer.

Dans le cas d'un ralentissement nécessitant l'arrêt,vers3à 5 km/h le boitier (1)commande l'électro-aimant(277.fig:6,.,29)du distributeur(263.fig:6,29)de commande de l'embrayage.Si toutefois le véhicule roule pour démarrer et n' atteint pas les 5km/h environ,dès que le noyau(261)de position de l'accélérateur revient à zéro,le boitier,ordonne: d'alimenter le distributeur(263) jour débrayer,ce qui permet de manoeuvrer le véhicule sans difficulté.

Fonctionnement de la dite"transmission"avec le passage des vitesses à commande semi-automatique par le levier de vitesses.

– possibilité de démarrage en 1ère et marche arrière embrayé mécaniquement.

– appuyer sur la touche de sélection,

– couper l'accélérateur en levant le pied,

– debrayer.

commander la 1ère,en tirant vers soi le levier de vitesses,qui déplace le plateau(72)par l'intermédiaire de l'axe(78.fig:1,4,13)et le rochet(74.fig:1,13)de montée des vitesses.En se déplaçant,le plateau(72)déplace,la came(144. fig:4,5,10,14)qui ouvre l'alimentation du piston(133/1)de 1ère par l'intermédiaire du clapet(85/1.fig:2),la came(145.fig:4,5 10,10b,15)ferme le clapet(89/1)afin d'alimenter le piston(133/1.fig:2)de 1ère qui pousse le piston(133.fig:5,6)de déplacement de la fourchette(22,fig:4,5,8,11,14)qui vide simultanément le piston(127.fig:6,12)de point mort par le clapet(104,fig:2, 5,6)et le piston(133/3.fig:2)par le clapet(89/3.fig:2).La fourchette(22) vient déplacer le pignon(14.fig:3)mobile de 1ère pour l'enclencher sur le pignon(14b.fig:7)fixe de 1ère;pendant le déplacement du plateau(7 ),le levier(53.fig:1,7,9,16)déplace l'épaulement(166.fig:7,27)de l'axe(120,fig:7, 12,16,27,28)cannelé,qui vient bloquer l'arbre(12)par l'intermédiaire du pignon(44.fig:7,27,28). La 1ère est enclenchée.

-réembrayer et accélérer simultanément,dès que le moteur atteint environ 2500 tr/mn,le boitier(1)entre en fonction et commande:

a)l'alimentation de l'électro-aimant(278/fig:6,29)du distriteur(265.fig6,17,18,29)de verrouillage du piston(223.fig:5,18)d'embrayage à commande par le pied.

b)l'alimentation de l'électro-aimant(63.fig:1,16,21)de déverrouillage du levier de vitesses.

Pour passer en 2ème au régime desiré,tirer le levier vers soi pour donner une impulsion au capteur(275/1.fig:1,21,29)afin d'informer le boitier(1),qui:

a)coupe l'accélération par l'intermédiaire de l'électro-aimant(253.fig:24a, 29)de déverrouillage de l'attelage(246.fig:24)(il est possible de lever le pied de l'accélérateur).

b)commande l'électro-aimant du distributeur(263,fig:6,29)d'embrayage et ainsi de suite....la manoeuvre de passage s'effectue comme dans le cas d'une commande automatique.

Pour passer en 3ème,tirer de nouveau sur le levier de vitesses pour donner une impulsion au capteur(275/1.fig:1,21,29),qui informe le boitier(1),qui:

-commande le cycle de passage,qui est le même pour l'ensemble des vitesses autres que la 1ère.

Les passages des vitesses se font à n'importe quel régime,avec toutefois un régime limite,qui,systématiquement passe la vitesse supérieure Pour descendre les vitesses,pousser le levier de vitesses pour donner une impulsion au capteur(275/2.fig:1,21,29)afin d'informer le boitier(1),qui:

-commande le cycle de descente de la vitesse inférieure.Dans le cas où deux ou plusieurs vitesses sont à descendre à la fois,après un arrêt brutal par freinage,supérieur à 50 bars environ,signalé au boitier(1),par le contact(276. fig:29)placé à la sortie de l'émetteur de frein,ou par simple oubli,le dit "boitier" commande la vitesse de redémarrage,en fonction de la vitesse roulante,donc élimine momentanément,le capteur(275/2.fig:1,21,29)du levier de vitesses.Dès que la vitesse est passée,le cycle reprend normalement. Pour rétrograder en 1ère,le boitier(1)remet en fonction,le levier de vitesses et l'embrayage,vers 15 km/h afin de s'arrêter,comme dans une coduite à commande manuelle.

Dans le cas d'un oubli de débrayage,arrive entre 3 et 5 km/h,le boitier(1) commande,soit le distributeur(264.fig:6,17,18,29)du coupleur(121),soit le distributeur(263.fig:6,29)de l'embrayage;selon le mode de réalisation de la dite "transmission".Pour redémarrer,appuyer sur l'accélérateur et le véhicule repart.Dans le cas d'un emploi du coupleur,dès que la 2ème passe,le distributeur(264)revient en position repos pour alimenter le coupleur(121)en position fixe afin de verrouiller les deux parties(11et12)de l'arbre primaire.

La marche arrière s'effectue comme dans le passage des vitesses à commande manuelle.

– Possibilité de démarrage en 1ère et marche arrière embrayé automatiquement avec l'emploi du coupleur(121.fig:2,3,5,17,19,20,29).

– appuyer sur la touche de sélection.

Le boitier(1)commande:

a)l'alimentation de l'électro-aimant(63.fig:1,16,21)de déverrouillage du levier de vitesses.

b)l'alimentation de l'électro-aimant(278.fig:6,29)du distributeur(265.fig: 6,17,19,29)de verrouillage du piston(223.fig:5,18)d'embrayage à commande par le pied.

c)l'alimentation de lélectro-aimant(279.fig:6,29)du distributeur(264.fig:6, 17,18,29)d'alimentation du coupleur(121).

– tirer le levier,pour sélectionner la 1ère et le cycle de passage s'effectue comme dans le passage à commande automatique.

Pour passer en 2ème: tirer sur le levier de vitesses pour donner une impulsion au capteur(275/1.fig:1,21,29),qui informe le boitier(1),qui:

– commande le cycle de passage de la 2ème.Pour les autres vitesses,il en est de même.En descente des vitesses,le coupleur(121)entre en fonction pendant l'opération de passage de la 1ère.

Le passage de la marche arrière s'effectue,comme dans la commande à passage des vitesses automatique.

– possibilité de démarrage en 1ère et marche arrière embrayé automatiquement sans l'emploi du coupleur(121).

Le démarrage s'effectue comme dans un démarrage automatique sans coupleur. Pour passer en 2ème-,tirer le levier de vitesses vers soi.Pour l'ensemble des vitesses,le passage est identique à celui d'un passage des vitesses à commande semi-automatique par le levier de vitesses avec coupleur(121).

Fonctionnement de la dite"transmission"avec le passage des vitesses à commande semi-automatique par la pédale d'embrayage.

– Possibilité de démarrage en 1ère et marche arrière embrayé mécaniquement.

    – appuyer sur la touche de sélection et le boitier(1):

a)commande le déverrouillage du levier de vitesses.

– lever le pied de l'accélérateur.

– appuyer sur la pédale d'embrayage,et la maintenir pendant le passage automatique de la 1ère,pour donner une impulsion au capteur(274.fig:1,5,29)qui informe le boitier(1)qui:

a)coupe l'accélérateur,par sécurité,par l'intermédiaire de l'électro-aimant (253.fig;24).

b)commande l'alimentation de l'électro-aimant(277.fig:6,9,29)du distributeur (263)fig:6,29)de commande du piston d'embrayage(215.fig:5)à commande automatique.

c)commande l'alimentation de l'électro-aimant(280.fig:6,29)du distributeur (266.fig;6,18,29)qui ferme l'ensemble des clapets(85.fig:5,6)et du clapet (94.fig:2,4)pour alimenter les pistons(127et128.fig:6,12)de point mort par le conduit(291b.fig:2,4,6,18).Dès que les axes(83et84.fig:4,12,13)sont en position point mort,le contact(245.fig:1,12) informe le boitier(1),qui:

d)commande l'électro-aimant(282.fig:6,29)du distributeur(267.fig:6,17,18,29) qui alimente les vérins(268.fig:1,4,5,9,17,29)de déplacement du plateau(72). Dès que le plateau(72)est arrivé en position de 1ère,le noyau(174.fig:1,16) informe le boitier(1),qui:

e)coupe l'alimentation de l'électro-aimant(282)du distributeur(267)d'alimentation des vérins(268et269);en se déplaçant le plateau(72)en traine le levier (58.fig:1,2,4,7,9,16)de commande du synchronisme.Le capteur(164.fig:7)placé sur l'arbre(12)et le capteur(175.fig:8,16)placé sur l'arbre(1 )secondaire informent de leur vitesse le boitier(1),qui:

f)coupe l'alimentation de l'électro-aimant(280)du distributeur(266)d'alimentation du point mort,qui revient en position repos pour alimenter le piston (133/1.fig:2)qui pousse le piston(133.fig:5,6)de déplacement de la fourchette (22.fig:4,5,8,11,14)de 1ère,qui déplace l'axe(83.fig:4,12,13)de point mort, qui libère le contact(245.fig:1,12)afin d'informer le boitier(1),qui:

g)coupe l'alimentation de l'électro-aimant(277)du distributeur(263)de commande du piston(215)d'embrayage à commande automatique.

Et simultanément.

h)coupe l'alimentation de l'électro-aimant(253.fig:24)de l'attelage de l'accélérateur.

Procéder au démarrage en réembrayant et en accélerant simultanément,comme dans une conduite à commande manuelle.

Pour passer en 2ème,appuyer sur la pédale d'embrayage,sans rester appuyer,pour donner une impulsion au capteur(274.fig/1,5,29)qui informe le boitier(1),qui:

a)commande l'électro-aimant(253.fig:24a,29)de l'accélérateur par sécurité.

b)commande l'électro-aimant(277.fig:6,9,29)du distributeur(263)d'alimentation du piston(215.fig:5)d'embrayage à commande automatique.Et ainsi de suite.... le passage s'effectue,comme dans une conduite à passage desvitesses automatique.

Pour effectuer,soit la montée,soit la descente d'une vitesse,le boitier(1) traite les informations données par le noyau(261.fig:24a,29)de course de l'accélérateur,par le compte-tours,la dépression du moteur et de la vitesse;si le rendement du moteur est progressif,le boitier(1)commande la montée d'une vitesse;si le rendement est négatif le boitier(1)commande la descente d'une ou plusieurs vitesses.

Dans le cas d'un arrêt brutal;le boitier(1)sélectionne la vitesse de redémarrage après avoir donné une impulsion au capteur(274.fig:1,5,29)de la fourchette(284.fig:5,29),l'opération de passage,s'effectue à la manière d'une conduite à passage des vitesses automatique.

Pour effectuer une marche arrière,procéder à la manière d'une conduite commande manuelle.

– Possibilité de démarrage en 1ère et marche arrière embrayé automatiquement avec l'emploi du coupleur(121.fig:2,3,5,17,19,20,29).

    – appuyer sur la touche de sélection et le boitier(1)commande:

a)l'alimentation de l'électro-aimant(63.fig:1,16,21)de verrouillage qui libère le levier de vitesses.

b)l'alimentation de l'électro-aimant(279.fig:6,29)du distributeur(264.fig: 6,17,18,29)d'alimentation du coupleur(121).

– appuyer sur la pédale d'embrayage,puis la relâcher,pour donner une impulsion au capteur(274.fig:1,5,29)qui informe le boitier(1),qui:

a)commande la procédure de passage de la 1ère qui séeffectue à la manière d' un passage à commande automatique.Pour passer en 2 me,lever le pied de là pédale accélérateur et débrayer simultanément pour donner une impulsion au capteur(274.fig:1,5,29)qui informe le boitier(1)afin d'analyser les données pour commander le passage de la 2ème,l'opération s'effectue à la manière d'un passage à commande automatique pour toutes les vitesses. Pour passer la marche arrière,effectuer à la manière d'une commande automatique.

– Possibilite de démarrage en 1ère et marche arrière embrayé automatiquement sans coupleur(121).

– appuyer sur la touche de sélection et le boitier(1):

a)déverrouille le levier de vitesses par l'intermédiaire de l'électro-aimant(63.fig:1,16,21).

– appuyer sur la pédale d'embrayage pour donner une impulsion au capteur (274.fig:1,5,29)qui informe le boitier(1)afin d'ordonner le passage de la 1ère qui s'effectue à la manière d'une commande par le levier avec un démarrage automatique sans coupleur(121).

Pour passer en 2ème,appuyer sur la pédale d'embrayage pour commander le passage qui s'effectue à la manière d'un passage des vitesses avec le levier de vitesses sans coupleur(121).

– Possibilité d'un emploi de la dite"transmission"soit sur une machine de fabrication,soit sur une machine de manutention.

Le passage des vitesses s'effectue à la manière d'une commande automatique où le moment de passage est commandé soit par une distance parcourue, soit par la présence d'un autre élément, soit programmé sur carte, soit par telécommande.

## Revendications

1. Ensemble de transmission pour véhicule ou machine à passage,assisté,des vitesses à commande,au moins partiellement automatique,à au moins 3 rapports, assemblés dans un carter principal (2) dans lequel sont placés les arbres primaire (12) et secondaire (13) avec leurs pignons fixes et mobiles,ces derniers étant liés en rotation par l'intermédiaire de fourchettes (22-24) de manoeuvre,reliées à des vérins de déplacement (133-136), après avoir été synchronisés lors du débrayage des moyens d'accouplement (11), caractérisé en ce que la mise en action des vérins est assurée par l'intermédiaire d'un plateau (72) relié à des moyens de déplacement linéaire ou rotatif,hydraulique et reliés ou/non à des moyens manuels actionnés par levier de vitesses;le dit"plateau" est pourvu de cames assurant l'ouverture de clapets d'alimentation des vérins de déplacement des dites"fourchettes"de sélection des vitesses,et en ce qu'il comporte,en outre des moyens de commande du dispositif d'accouplement à l'arbre moteur,une pompe (122) d'alimentation des moyens de déplacement du dit"plateau"et de l'asservissement de commande,un boîtier(1)de commande des organes relié à des capteurs de mesure de fonctionnement du moteur et de l'ensemble de transmission, permettant de programmer le passage des vitesses en fonction de données prédéfinies.

2. Ensemble de transmission,selon la revendication 1, caractérisé en ce que l'ensemble de synchronisme est commandé par le déplacement du plateau(72) et comporte un ensemble de pignons fixes (33) entrainé par un des arbres primaire ou secondaire et un autre ensemble de pignons mobiles (34) entrainé par l'autre des dits"arbres"et s'engrennent ensemble pour former les rapports des N vitesses de la transmission,et en ce que des moyens d'accouplement,déplacés par le plateau(72),viennent déplacer un axe(120),entrainé par l'arbre comportant l'ensemble des pignons mobiles et,qui coulisse à l'intérieur de ces dits"pignons mobiles"pour placer un épaulement(166),prévu à cet effet sur celui-ci,sur le pignon correspondant à la vitesse sélectionnée,afin de le freiner et le lier en rotation à son arbre,par l'intermédiaire de billes (46ou47)logées entre des freins(45),usinés en forme de "haricot",qui tournent dans un alésage,prévu dans le dit"pignon",afin d'enclencher la vitesse sélectionnée,après que les capteurs(164)et(175),placés respectivement sur l'arbre primaire et secondaire,aient signalé leur vitesse respective au boitier(1)de commande,afin d'alimenter le piston de déplacement de la fourchette de la vitesse sélectionée.

3. Ensemble de transmission,selon l'une des revendications 1 et 2,caractérisé en ce qu'il comporte un ensemble de mise au point mort des fourchettes de passage des vitesses,actionné par au moins un vérin,alimenté soit par un clapet(94) soit par un distributeur(166),et agissant en sens opposé des vérins de poussée des fourchettes de passage des vitesses et,ramenant ceux-ci et des fourchettes de sécurité en position repos pour permettre la poursuite du déplacement du plateau(72)de sélection;la position de point mort étant signalée par le contact ou le capteur(245)au boitier(1),afin d'alimenter un des distributeurs(267)ou(270)de déplacement du dit"plateau",en mode automatique et semi-automatique.

4. Ensemble de transmission,selon l'une des revendications 1 et 3 caractérisé en ce qu'un ensemble de fourchettes de sécurité empêche le passage de deux ou plusieurs vitesses,à la fois,dû à la poussée simultanée de deux ou plusieurs pistons de commande de fourchettes de passage des vitesses,en maintenant les N autres fourchettes que celle de la vitesse sélectionnée,en position point mort, par l'intermédiaire de doigts(118)plaqués par le plateau(72)qui libère le dit"doigt"de la vitesse sélectionnée,par l'intermédiaire d'une came(67),usinée sur le dit"plateau"en correspondance avec la position de chaque vitesse; le dégagement du dit"doigt"se faisant par l'intermédiaire de la pression d'huile.

5. Ensemble de transmission,selon la revendication 1,caractérisé en ce que l'organe d'accouplement est constitué d'un embrayage relié à une pédale afin de réaliser une conduite manuelle et l'ensemble de commandes comporte, comme moyens de déplacement du plateau(72),un vérin(269)alimenté par un distributeur(267)ou 270)et en outre:

– un piston(215)d'embrayage,alimenté par au moins un distributeur(263),commandé par au moins un électro-aimant(277),à partir du dit"boitier" de commande, ce dit"distributeur"comportant un clapet(295)de décharge avec gicleur(291) de réglage de rapidité de vidange,pour le retour en position repos de la fourchette(284)d'embrayage.

– un organe de verrouillage de la commande d'embrayage;par exemple un piston (218)alimenté par un distributeur(265)commandé par un électro-aimant(278)à partir du dit"boitier",afin de réaliser une conduite automatique.

– Ces moyens de commande agissant en fonction des ordres fournis par:

– un sélecteur(3)de mode de marche automatique,semi-automatique ou manuel, afin d'alimenter un capteur destiné à signaler le sens de marche fourni par l'organe de sélection du sens de marche;par exemple le levier de vitesses.

– un capteur(274)de position de l'accouplement.

– un capteur ou noyau(261)de position ou de course de l'accélérateur,dans le cas d'un emploi sur véhicule.

– au moins un capteur fonctionnel tel que :régime,vitesse,température, pression,position afin de donner l'ordre de passage d'une vitesse.

– un capteur(174)de position du plateau(72)de sélection,de sorte à informer le dit"boitier"dès que le dit"plateau"est à la place de la vitesse sélectionnée,pour arrêter l'alimentation du vérin de déplacement du dit"plateau".

6. Ensemble de transmission,selon les revendications 1 et5 caractérisé en ce qu'un distributeur(264)vient alimenter un système d'accouplement a glissement,interposé entre l'arbre primaire et l'embrayage,et commandé,par l'intermédiaire d'un électro-aimant(279)à partir du dit"boitier",afin de déverrouiller ces dites"parties",par l'intermédiaire d'un piston(137)cannelé,placé entr'elles et alimenter des cylindres(138)radiaux,de mise en pression d'huile qui poussent des galets(141)sur des cames(142),usinées sur l'arbre(11)de sortie d'embrayage.Dans le dit"coupleur"(121)des galets(140)empêchent l'arbre(12) primaire d'avoir une vitesse de rotation supérieure à l'arbre(11)de sortie d'embrayage.

7. Ensemble de transmission,selon l'une des revendications 1 à 4.,caractérisé en en qu'il comporte un système d'embrayage du levier de vitesses afin de réaliser,en outre,un passage des vitesses à commande manuelle,par l'intermédiaire d'un système mécanique de déplacement du plateau(72)de sélection,qui est commandé par un axe(78),relié au levier de vitesses,et qui comporte un premier rochet (74) pour les vitesses montantes et un deuxième rochet(74b)pour les vitesses descendantes pour s'accrocher sur des crémaillères(73),fixées sur le dit "plateau",afin de le déplacer d'une distance définie par la course du levier de vitesses,afin d'ouvrir l'alimentation du piston de poussée de la fourchette de passage de la vitesse correspondante;à cet ensemble vient s'ajouter un vérin (268) de dégagement,placé en bout,de l'axe (78) ,afin de maintenir dégagé le dit"rochet"de vitesses descendantes pour laisser le déplacement libre du plateau(72),lors d'un rétrogradage de plusieurs vitesses à la fois,en sautant de vitesses,dans le cas d'un passage des vitesses automatique et semi-automatique.

8. Ensemble de transmission,selon l'une des revendications1,5 et 7,caractérisé en ce que le plateau(72) de sélection comporte en outre de la came(144)d'ouverture des clapets(85)d'alimentation des pistons de commande des fourchettes de passage des vitesses,une came(146)de fermeture du piston de vidange de chaque piston de commande des dites"fourchettes"de passage des vitesses,des cames(143)de vidange des pistons de point mort,des cames(67)de déverouillage des doigts (118)de verrouillage des fourchettes de sécurité ainsi que la rainure(68)de commande de marche arrière.

9. Ensemble de transmission,selon l'une des revendications1 et5,caractérisé en ce qu'un dispositif de coupure d'accélération est monté dans un circuit de l'accélérateur,commandé à partir du boitier(1),pour permettre de couper le régime moteur sans lever le pied de la pédale d'accélérateur à chaque passage des vitesses,en commande automatique et semi-automatique,et laisser toute liberté d'action sur la commande de l'accélérateur,constitué d'un électro-aimant(253)déverouillant,par l'intermédiaire d'une came(254),la partie de couplage

EP 0 365 607 B1

du câble accélérateur à la commande du volet d'admission d'air.

10. Ensemble de transmission,selon les revendications1.2.5.7,caractérisé en ce que l'ensemble des pignons fixes et mobiles des arbres primaire et secondaire présentent d'une part un taillage de dents en biais de quelques degrés pour permettre une plus grande rapidité de passage et faciliter le déverrouillage des billes(46)ou(47)de blocage du pignon synchronisateur,lors du passage d'une vitesse;d'autre part,les angles d'attaque des dents sont usinés en retrait de 3mm environ, sur 4 dents sur 5 environ;ce qui limite les possibilités de friction entre pignons,dans le cas d'une défaillance du synchronisme.


**Patentansprüche**

1. Getriebeanordnung für Kraftfahrzeuge oder Maschine mit hilfsgesteuerter, mindestens teilweise automatischer Gangschaltung mit mindestens 3 Gängen, eingebaut in ein Hauptgehäuse (2). in dem die Achswelle (12) und die Hauptwelle (13) mit ihren festen und beweglichen Zahnrädern angeordnet sind, wobei diese letztgenannten mittels mit Zylindern (133-136) verbundener Betätigungsgabeln (22-24) zur Rotation verbunden sind, nachdem sie beim Auskuppeln der kupplungsmittel (11) synchronisiert worden sind, dadurch gekennzeichnet, daß die Betätigung der Zylinder mittels einer mit hydraulischen Mittels zur linearen oder Drehbewegung verbundenen Platte (72) sichergestellt wird, die mit durch einen Ganghebel betätigen manuellen Mitteln verbunden sind oder nicht, wobei die genuannte "Platte" mit Nocken versehen ist, die für die Öffnung der Einlaßklappen der Zylinder zur Verschiebung der genannten "Gabeln" zur Gangwahl sorgen, und dadurch, daß sie außer den Mitteln zur Betätigung der Vorrichtung zur Ankupplung an die Antriebswelle eine Pumpe (122) zur Speisung der Mittel zur Verschiebung der genannten "Platte" und zur Regelung der Betätigung aufweist, und einen Kasten (1) zur Steuerung der Organe, der mit Meßwertgebern zur Messung der Funktionsweise des Motors und der Getriebeanordnung verbunden ist und es erlaubt, das Wechseln der Gänge in Abhangigkeit von vorher festgelegten Daten zu programmieren.

2. Getriebeanordnung gemäß Patentanspruch 1, dadurch gekennzeichnet, daß die Synchronisationsanordnung durch die Verschiebung der Platte (72) betätigt wird und eine Reihe fester Zahnräder (33) enthält, die von der Achswelle oder der Hauptwelle mitgeführt werden, und eine andere Reihe beweglicher Ritzel (34), die von der anderen der genannten "Wellen" mitgeführt werden, die ineinandergreifen, um die Übersetzungen der N Gänge des Getriebes zu bilden, und dadurch, daß von der Platte (72) verschobene Kupplungsmittel eine Achse (120) verschieben, die von der Welle mitgeführt wird, die die Reihe beweglicher Zahnräder trägt, die im Inneren der genannten "beweglichen Zahnräder" gleitet, um eine Schulter (166), die eigens zu diesem Zweck auf dieser vorgesehen ist, an das Zahnrad zu bringen, die dem gewählten Gang entspricht, um es mittels Kugeln (46 oder 47), die zwischen Bremsen (45) angeordnet sind, die "bohnenförmig" ausgebildet sind und sich in einer im genannten "Zahnrad" vorgesehenen Bohrung drehen, zu bremsen und zur Rotation mit seiner Welle zu verbinden, um den gewählten Gang einzurasten, nachdem die auf der Achswelle bzw. auf der Hauptwelle angeordneten Meßwertgeber (164) und (175) deren jeweilige Geschwindigkeit dem Steuerkasten (1) mitgeteilt haben, um den Kolben zur Verschiebung der Gabel des gewählten Ganges zu speisen.

3. Getriebeanordnung gemäß einem der Patentansprüche 1 und 2, dadurch gekennzeichnet, daß sie eine Anordnung zur Rückstellung der Schaltgabeln in Leerlaufstellung aufweist, die durch mindestens einen, durch ein Ventil (94) oder einen Verteiler (166) gespeisten Zylinder betätigt wird, der in der den Zylindern zur Versetzung der Schaltgabeln entgegengesetzten Richtung arbeitet und diese, sowie Sicherheitsgabeln in Ruhestellung zurücksetzt, um die Fortsetzung der Verschiebung der Platte (72) zur Gangwahl zu ermöglichen, wobei die Leerlaufstellung durch den Kontakt oder Meßwertgeber (245) dem Kasten (1) mitgeteilt wird, um in der automatischen oder halbautomatischen Betriebsart einen der Verteiler (267) oder (270) zur Verschiebung der genannten "Platte" zu speisen.

4. Getriebeanordnung gemäß einem der Patentansprüche 1 und 3, dadurch gekennzeichnet, daß eine Reihe Sicherheitsgabeln die gleichzeitige Schaltung zweier oder mehrerer Gänge durch gleichzeitiges Drücken zweier oder mehrerer Kolben zur Betätigung von Schaltgabeln verhindert, indem sie die N anderen Gabeln als die den gewählten Gang entsprechende mittels durch die Platte (72) angedrückter Zapfen (118) in Leerlaufstellung hält. Platte, die den genannten "Zapfen" des gewählten Ganges mittels eines Nockens (67) freisetzt, der an der genannten "Platte" an der jedem Gang entsprechenden Stelle ausgearbeitet ist, wobei die Freisetzung des genannten "Zapfens" mittels des Öldruckes erfolgt.

5. Getriebeanordnung gemäß Patentanspruch 1, dadurch gekennzeichnet, daß das Kupplungsorgan aus einer zur Schaffung einer manuellen Bedienung mit einem Pedal verbundenen Kupplung besteht und die Bedienungsanordnung als Mittel zur Verschiebung der Platte (72) einen durch einen Verteiler (267 oder 270) gespeisten Zylinder (269) enthält, sowie

– einen Kupplungskolben (215), gespeist durch mindestens einen Verteiler (263), der durch mindestens

**24**

einen Elektromagneten (277) vom genannten "Steuerkasten" betätigt wird, wobei der genannte "Verteiler" ein Ausflußventil (295) mit Düse (291) zur Regelung der Ausflußgeschwindigkeit für die Rückkehr der Kupplungsgabel (284) in Ruhestellung aufweist,

– ein Organ zur Sperrung der Kupplungsbedienung, beispielsweise einen Kolben (218), der durch einen mittels eines Elektromagneten (278) durch den genannten "Kasten" betätigten Verteiler (265) gespeist wird, um eine automatische Bedienung zu schaffen,

– wobei diese Steuerungsmittel in Abhängigkeit von Befehlen arbeiten, die geliefert werden von

– einem Betriebsartenwähler (3) zur Auswahl des automatischen, halbautomatischen oder manuellen Betriebs, zur Speisung eines Meßwertgebers, der dazu bestimmt ist, die Laufrichtung zu melden, die das Organ zur Auswahl der Laufrichtung, beispielsweise der Ganghebel, liefert,

– einem Meßwertgeber (274) für die Stellung der Kupplung,

– einem Meßwertgeber oder Kern (261) für die Stellung oder die Bewegung des Gashebels im Fall der Verwendung in einem Kraftfahrzeug,

– mindestens einem Funktionsmeßwertgeber, etwa für Drehzahl, Geschwindigkeit, Temperatur, Druck, Stellung, zur Erteilung des Befehls zum Gangwechsel,

– einem Meßwertgeber (174) für die Stellung der Platte (72) zur Gangwahl, um den genannten "Kasten" sofort darüber zu informieren, daß sich die genannte "Platte" an der Stelle des gewählten Ganges befindet, um die Speisung des Zylinders zur Verschiebung der genannten "Platte" zu unterbrechen.

6. Getriebeanordnung gemäß Patentanspruch 1 und 5, dadurch gekennzeichnet, daß ein Verteiler (264) ein zwischen der Achswelle und der Kupplung angeordnetes und mittels eines Elektromagneten (279) durch den genannten "Kasten" gesteuertes Rutschkupplungssystem speist, um diese genannten "Teile" mittels eines zwischen ihnen angeordneten gerillten Kolben (137) zu entriegeln, sowie radiale Zylinder (138) zur Öldruckerzeugung, die Rollen (141) in Nocken (142) drücken, die in der Abtriebswelle (11) der Kupplung ausgearbeitet sind, wobei im genannten "Koppler" (121) Rollen (140) die Achswelle (12) daran hindern, eine höhere Rotationsgeschwindigkeit zu haben, als die Abtriebswelle (11) der Kupplung.

7. Getriebeanordnung gemäß einem der Patentansprüche 1 bis 4, dadurch gekennzeichnet, daß sie ein System zum Ankuppeln des Ganghebels aufweist, um zusätzlich eine manuell betätigte Gangschaltung mittels eines Systems zur mechanischen Verschiebung der Platte (72) zur Gangwahl zu schaffen, das durch eine mit dem Ganghebel verbundene Achse (78) betätigt wird und ein erstes Klinkwerk (74) für größer werdende Gänge und ein zweites Klinkwerk (74b) für kleiner werdende Gänge enthält, um in an der genannten "Platte" befestigte Zahnstangen (73) einzurasten, um die Platte um eine durch den Weg des Ganghebels definierte Strecke zu verschieben, um für die Speisung des Kolbens zum Drücken der Schaltgabel des entsprechenden Ganges zu sorgen, wobei zu dieser Einheit noch ein Auslösungszylinder (268) hinzukommt, der am Ende der Achse (78) angeordnet ist, um das genannte "Klinkwerk" für kleiner werdende Gänge gelöst zu halten, um der Platte (72) beim Zurückschalten um mehrere Gänge gleichzeitig durch Überspringen von Gängen im Falle des automatischen und halbautomatischen Gangwechsels die freie Verschiebung zu ermöglichen.

8. Getriebeanordnung gemäß einem der Patentansprüche 1, 5 und 7, dadurch gekennzeichnet, daß die Platte (72) zur Gangwahl außer dem Nocken (144) zur Öffnung der Einlaßventile (85) der Kolben zur Betätigung der Schaltgabeln einen Nocken (146) zum Schließen des Ausflußkolbens jedes Betätigungskolbens der Genannten "Ganggabeln". Nocken (143) zum Leeren der Leerlaufstellungskolben. Nocken (67) zum Entriegeln der Zapfen (118) zur Sperrung der Sicherheitsgabeln, sowie die Rille (68) zur Betätigung des Rückwärtsganges aufweist.

9. Getriebeanordnung gemäß einem der Patentansprüche 1 und 5, dadurch gekennzeichnet, daß eine Vorrichtung zur Unterbrechung der Beschleunigung in den Gashebelkreis eingebaut ist, die vom Kasten (1) betätigt wird, um im automatischen und halbautomatischen Betrieb bei jedem Gangwechsel zu erlauben, die Motordrehzahl zu verringern, ohne den Fuß vom Gaspedal zu nehmen und die Freiheit zur Betätigung des Gashebels zu erhalten, bestehend aus einem Elektromagneten (253), der mittels eines Nockens (254) das Teil zum Ankoppeln des Gashebeiseiles an die Betätigung der Luftklappe löst.

10. Getriebeanordnung gemäß den Patentansprüchen 1, 2, 5, 7, dadurch gekennzeichnet, daß die festen und beweglichen Zahnräder der Achswelle und der Hauptwelle einerseits eine um einige Grad schräge Zahnform aufweisen, um eine größere Geschwindigkeit des Gangwechsels zu erlauben und die Lösung der Kugel (46) oder (47) zur Sperrung des Synckronisationsrades beim Gangwechsel zu erleichtern und andererseits die Angriffswinkel der Zähne an ungefähr 4 von 5 Zähnen um ca. 3 mm zurückweichend ausgearbeitet sind, was die Möglichkeiten zur Reibung zwischen Zahnrädern im Fall eines Versagens der Synchronisation begrenzt.

## Claims

1. Transmission assembly for a vehicle or machine with assisted gear shift, with at least partially automatic control and with at least 3 ratios, assembled in a main casing (2) in which are placed the primary shaft (12) and the secondary shaft (13) with their stationary and moving gear wheels, the latter being linked in rotation via operating forks (22-24), connected to displacement cylinders (133-136), after having been synchronised, when the coupling means (11) are disengaged, characterised in that the cylinders are activated via a plate (72) connected to hydraulic means for linear or rotary displacement and connected or not connected to manual means actuated by a gear lever; the said "plate" is provided with cams opening valves supplying the displacement cylinders of the said gear-selector "forks", and in that it comprises, in addition to the means for controlling the device for coupling to the drive shaft, a pump (122) for supplying the means of displacement of the said "plate" and for the servo-control, a box (1) for controlling the elements, connected to sensors measuring the running of the engine and the transmission assembly, enabling the gear shift to be programmed as a function of predefined data.

2. Transmission assembly according to Claim 1, characterised in that the synchromesh assembly is controlled by the displacement of the plate (72) and comprises a set of fixed gear wheels (33), driven by one of the primary or secondary shafts, and another set of moving gear wheels (34), driven by the other one of the said "shafts" and meshing together to form the ratios of the N gears of the transmission, and in that coupling means, displaced by the plate (72), displace a spindle (120) driven by the shaft possessing the set of moving gear wheels and which slides inside these said "moving gear wheels" in order to place a collar (166), provided for this purpose on this spindle, on the gear wheel corresponding to the gear selected, in order to brake it and to link it in rotation to its shaft, via balls (46 or 47) housed between brakes (45), machined in a "bean" shape, which rotate in a bore provided in the said "gear wheel", in order to engage the selected gear, after the sensors (164) and (175) placed respectively on the primary and secondary shaft have signalled their respective speed to the control box (1) so as to supply the piston for displacing the fork of the gear selected.

3. Transmission assembly according to either of Claims 1 and 2, characterised in that it comprises an assembly for placing the gear-shift forks in the neutral position, which assembly is actuated by at least one cylinder supplied either by a valve (94) or by a distributor (166), and acting in the opposite direction to the cylinders for pushing the gear-shift forks, and returning the latter and the safety forks into the rest position in order to enable the displacement of the selection plate (72) to continue; the neutral position being signalled to the box (1) by the contact or the sensor (245) in order to supply one of the distributors (267) or (270) for displacing the said "plate", in automatic and semi-automatic mode.

4. Transmission assembly according to either of Claims 1 and 3, characterised in that a set of safety forks prevents the simultaneous shifting of two or more gears, caused by the simultaneous thrust from two or more gear-shift fork control pistons, maintaining the N forks, apart from that of the selected gear, in the neutral position via fingers (118) applied by the plate (72) which frees the said "finger" of the selected gear via a cam (67) machined on the said "plate" so as to correspond with the position of each gear; the said "finger" being released via the oil pressure.

5. Transmission assembly according to Claim 1, characterised in that the coupling member consists of a clutch connected to a pedal so as to form a manual drive, and the control assembly comprises, as means for displacing the plate (72), a cylinder (269) supplied by a distributor (267) or (270) and, furthermore:
   – a clutch piston (215), supplied by at least one distributor (263), controlled by at least one electromagnet (277) from the said control "box", this said "distributor" comprising a pressure relief valve (295) with a jet (291) for adjusting the speed of the draining, in order to return the clutch fork (284) into the rest position.
   – a member for locking the clutch control; for example a piston (218) supplied by a distributor (265) controlled by an electromagnet (278) from the said "box", so as to produce automatic drive.
   – These control means acting as a function of the orders delivered by:
      – an automatic, semi-automatic or manual mode selector (3), so as to supply a sensor intended to signal the running direction delivered by the running-direction selection member; for example the gear lever.
      – a coupling-position sensor (274).
      – a sensor or core (261) for sensing the position or travel of the accelerator, in the case of use on a vehicle.
   – at least one functional sensor such as: revolutions per minute, speed, temperature, pressure, position so as to give the order for a gear shift.
      – a sensor (174) sensing the position of the selection plate (72) so as to inform the said "box" as soon as the said "plate" is in place for the gear selected, in order to stop the supplying of the cylinder for displacing the said "plate".

6. Transmission assembly according to Claims 1 and 5, characterised in that a distributor (264) supplies a slip coupling system placed between the primary shaft and the clutch and controlled, via an electromagnet (279) from the said "box", so as to unlock these said "parts" via a splined piston (137) placed between them and to supply the radial cylinders (138), for pressurising the oil, which push rollers (141) onto cams (142) machined on the clutch output shaft (11). In the said "coupler" (121), rollers (140) prevent the primary shaft (12) from having a greater rotational speed than the clutch output shaft (11).

7. Transmission assembly according to one of Claims 1 to 4, characterised in that it comprises a gear-lever clutch system so as to effect, in addition, a manually-controlled gear shift via a mechanical system for displacing the selection plate (72), which is controlled by a spindle (78), connected to the gear lever, and which comprises a first dog (74) for changing up gears, and a second dog (74b) for changing down gears, for engaging on racks (73) fixed to the said "plate", so as to displace the latter by a distance defined by the travel of the gear lever, so as to open the supply to the piston for pushing the corresponding gear-shift fork; this assembly is supplemented by a cylinder (268), placed at the end, for releasing the spindle (78) so as to keep the said gearing-down "dog" released in order to allow the free displacement of the plate (72), when changing down by several gears simultaneously, jumping gears, in the case of an automatic and semi-automatic gear shift.

8. Transmission assembly according to one of Claims 1, 5 and 7, characterised in that the selection plate (72) comprises, in addition to the cam (144) for opening the valves (85) supplying the gear-shift fork control pistons, a cam (146) for closing the piston for draining each control piston of the said gear-shift "forks", cams (143) for draining the neutral-position pistons, cams (67) for unlocking the fingers (118) for locking the safety forks and the reverse-gear control groove (68).

9. Transmission assembly according to either of Claims 1 and 5, characterised in that an acceleration cut-off device is mounted in the circuit of the accelerator, controlled from the box (1), in order to enable the engine speed to be cut off without lifting one's foot off the accelerator pedal for each gear shift, in automatic and semi-automatic control, and to allow complete freedom to act on the accelerator control, consisting of an electromagnet (253) unlocking, via a cam (254), the part coupling the carburetter control cable to the choke-valve control.

10. Transmission assembly according to Claims 1, 2, 5, 7, characterised in that the set of stationary and moving gear wheels of the primary and secondary shafts have, on the one hand, teeth cut with a chamfer of a few degrees in order to permit a quicker shift and to facilitate the unlocking of the balls (46) or (47) for locking the synchroniser gear wheel, when shifting gear; on the other hand, the wheel angles of the teeth are machined set back by approximately 3 mm, on approximately 4 out of 5 teeth; this limits the possibilities of friction between gear wheels, in the case of a failure of the synchromesh mechanism.

FIG:1

EP 0 365 607 B1

28

FIG· 2

FIG: 3

FIG:4

FIG:5

32

FIG:6

FIG:7

FIG:8

FIG.9

EP 0 365 607 B1

36

FIG:10

FIG:10a

Coupe A A

FIG:10b

Coupe BB

FIG:10c

Coupe CC

FIG:11

FIG:12

Coupe AA

FIG:13

FIG:14

FIG:15

FIG:16

FIG:17

FIG:18

FIG:19

FIG:20

FIG:21

FIG:21a
Coupe AA

FIG:21c
Coupe CC

FIG:21b
Coupe BB

Coupe DD

FIG:21d

FIG:23

FIG:22

FIG:24

FIG:24b

Vue BB

FIG:24a

Coupe AA

246

251

252 248

257

A

B B

A

256

255

253

250

257

249

254

251 252

258

247

248

259

260

261

FIG:25

FIG:26

FIG:28

FIG:27

FIG:29

FIG:30